# EUROPEAN PATENT APPLICATION

(11) **EP 2 211 522 A1**
(43) Date of publication of application: **28.07.2010**
(21) Application number: 08860212.3
(22) Date of filing: 03.12.2008
(51) Int. Cl.: H04L 29/06

(54) **MEDIA STREAM CONTROL METHOD, SYSTEM AND LOGIC ENTITY**

(30) Priority: 06.12.2007 CN 200710032166; 28.03.2008 CN 200810090544
(71) Applicant: Huawei Technologies Co., Ltd., Longgang District, Shenzhen Guangdong 518129 (CN)
(72) Inventor: WANG, Xiao, Shenzhen Guangdong 518129 (CN); ZHU, Dongming, Shenzhen Guangdong 518129 (CN); ZHONG, Jianfeng, Shenzhen Guangdong 518129 (CN); WANG, Geng, Shenzhen Guangdong 518129 (CN); LI, Jincheng, Shenzhen Guangdong 518129 (CN); CHENG, Shumin, Shenzhen Guangdong 518129 (CN)
(74) Representative: Thun, Clemens
(86) International application number: PCT/CN2008/073325
(87) International publication number: WO 2009/074099

(57) **Abstract**

A media stream controlling method, system, and logic entity are provided. The method is applied to an Internet Protocol (IP) packet network, and includes the steps of: receiving a media control request sent by a client; performing correlative processing on the media control request; and controlling a media stream according to the correlative processing result. A media stream controlling method, system, and device are further provided. Thus, a Real Time Streaming Protocol (RTSP) processing function (RPF) is introduced in the network and performs correlative processing on the media control request, so that a plurality of clients is enabled to control the same media stream, and thus the problem that RTSP statuses are asynchronous when the plurality of clients controls the media stream is solved.

## Description

The application claims priority to Chinese Patent Application No. 200710032166.1, filed on December 6, 2007 and entitled "MEDIA STREAM CONTROLLING METHOD, SYSTEM, AND DEVICE", and Chinese Patent Application No. 200810090544.6, filed on March 28, 2008 and entitled "MEDIA STREAM CONTROLLING METHOD, SYSTEM, AND LOGIC ENTITY", which are both incorporated herein by reference in their entireties.

### FIELD OF THE TECHNOLOGY

The present invention relates to the field of communications technologies, and more particularly to a media stream controlling method, system, and logic entity.

### BACKGROUND OF THE INVENTION

An Internet Protocol Television (IPTV) is a technology capable of providing a plurality of interactive services including digital television for home users by utilizing a wideband wired television network and integrating a plurality of technologies including Internet, multimedia, and communications technologies. The user may enjoy the IPTV service at home by using a Personal Computer (PC) or a common television set equipped with a network set-top box, or enjoy the IPTV service through a mobile terminal. The IPTV service provides unicast, broadcast, or multicast video services by using the Transmission Control Protocol (TCP)/Internet Protocol (IP) as a bearer protocol, effectively combines technologies in the three fields of the television network, the telephone network and the Internet, and thus becomes the most representative service of the convergence of the three networks and attracts more and more attention in the industry.

The IP Multimedia Subsystem (IMS) is a subsystem supporting IP multimedia services and is proposed by the 3rd Generation Partnership Project (3GPP). The IMS is an IP-based standard system independent of access technologies, and may inter-work with the existing voice and data networks. The IMS enables various types of clients to establish peer-to-peer IP communications and acquire the desired Quality of Service (QoS). In addition to session management, the IMS also involves the required functions (for example, registration, security, accounting, bearer control, and roaming) for providing services, and thus becomes a core of the IP core network.

In the 3GPP, the Packet-switched Streaming Service (PSS)-based unicast streaming media services and the Multicast Broadcast Multimedia System (MBMS)-based multicast streaming media services are implemented. The IMS-based IPTV, however, is not studied. In order to fully utilize the abundant service capabilities of the IMS and provide the users with better service experience, it becomes one of the current tasks of the 3GPP to provide the IPTV services based on the IMS and in consideration of the existing PSS and MBMS services.

The Real-Time Streaming Protocol (RTSP) in the prior art is for establishing and negotiating a real-time streaming session, and control the sending of real-time streaming data on a client and a server end. The control operations include pause, fast forward, fast reverse, location, and record.

In the implementation of the present invention, the inventors found that the prior art has at least the following problems.

For the established real-time streaming session, the RTSP supports the single-client control only. In the existing network architecture, for example, the IMS-based IPTV architecture, a plurality of clients may control one real-time streaming session, but the existing server end designed according to RTSP cannot support a plurality of clients to control the same real-time streaming session.

### SUMMARY OF THE INVENTION

The present invention is directed to a media stream controlling method, system, and logic entity, so that a plurality of clients may control the same real-time streaming session.

In order to achieve the above objective, in an embodiment, the present invention provides a media stream controlling method, which is applied to an IP packet network and includes the following steps.

A media control request sent by a client is received.

Correlative processing is performed on the media control request.

A media stream is controlled according to the correlative processing result.

In an embodiment, the present invention further provides a network logic entity, which is configured to control a media stream in an IP packet network and includes a receiving unit, a correlative processing unit, and a controlling unit.

The receiving unit is configured to receive a media control request sent by a client.

The correlative processing unit is configured to perform correlative processing on the media control request received by the receiving unit.

The controlling unit is configured to control the media stream according to the correlative processing result of the correlative processing unit.

In an embodiment, the present invention further provides a media stream controlling system, which is applied to an IP packet network and includes a client and an RTSP Processing Function (RPF).

The client is configured to send a media control request to the RPF.

The RPF is configured to receive the media control request sent by the client and perform correlative processing on the media control request, and control a media stream according to the correlative processing result.

In an embodiment, the present invention further provides a media stream controlling method, which is applied in an IP packet network and includes the following steps.

A control right request message is received.

A validity check is performed on the control right request message.

A control right is switched from a first client to a second client, according to the control right request message that passes the validity check.

In an embodiment, the present invention further provides a control right switching entity, which includes a receiving unit, a checking unit, and a switching unit.

The receiving unit is configured to receive a control right request message.

The checking unit is configured to perform a validity check on the control right request message received by the receiving unit.

The switching unit is configured to switch a control right from a first client to a second client, according to the control right request message that passes the validity check performed by the checking unit.

In an embodiment, the present invention further provides a media stream controlling client, which includes a message sending unit, a message receiving unit, and a processing unit.

The message sending unit is configured to send a control right request message to a control right switching entity.

The message receiving unit is configured to receive an indication message which is returned by the control right switching entity and indicates that a control right needs to be switched.

The processing unit is configured to hand over a control right or take over a control right according to the indication message received by the message receiving unit.

In an embodiment, the present invention further provides a media stream controlling system, which is applied in an IP packet network and includes the control right switching entity, the media stream controlling client, and a media processing entity.

The media processing entity is configured to alter a media control channel, and retract or deliver a control right according to an indication message sent by the control right switching entity.

Specifically, the media processing entity is a Media Function (MF) or a Media Resource Function (MRF).

As compared with the prior art, the present invention has the following advantages.

Through the embodiments of the present invention, an RPF is introduced into the network and performs the correlative processing on the media control request, so that a plurality of clients is enabled to control the same media stream. In this way, the problem that RTSP statuses are asynchronous when the plurality of clients controls the media stream is solved. The control right is switched from the client with the control right to one of other common clients without the control right according to the control right request message sent by a client of said other common clients, so that the plurality of clients is enabled to control the same media stream. In this way, the situation that services are unavailable because conflicts occur when the plurality of clients simultaneously operates the same media stream in the prior art can be prevented, and thus the system performance is effectively improved.

### BRIEF DESCRIPTION OF THE DRAWINGS

FIG. 1 is a flow chart of a media stream controlling method according to an embodiment of the present invention;
FIG 2 is a flow chart of establishing an RTSP session in the single-session mode according to a first embodiment of the present invention;
FIG 3 is a flow chart of establishing an RTSP session in the multi-session mode according to a second embodiment of the present invention;
FIG 4 is a flow chart of establishing an RTSP session in the multi-session mode according to a third embodiment of the present invention;
FIG. 5 is a flow chart of establishing an RTSP session in the multi-session mode according to a fourth embodiment of the present invention;
FIG 6 is a flow chart of controlling a media stream by establishing a Session Initiation Protocol (SIP) session according to a fifth embodiment of the present invention;
FIG 7 is a flow chart of locking or unlocking a session according to a sixth embodiment of the present invention;
FIG 8 is a flow chart of a process that an application server (AS) delivers policies to perform client right control according to a seventh embodiment of the present invention;
FIG 9 is a flow chart of negotiating a control right between a client and an RPF according to an eighth embodiment of the present invention;
FIG 10 is a flow chart of negotiating a control right between clients according to a ninth embodiment of the present invention;
FIG. 11 is a flow chart of synchronizing statuses of clients according to a tenth embodiment of the present invention;
FIG 12 is a flow chart of a process that an RPF controls the synchronizing of statuses of clients according to an eleventh embodiment of the present invention;
FIG 13 is a schematic structural view of a network logic entity according to an embodiment of the present invention;
FIG 14 is a schematic view of a media stream controlling system according to an embodiment of the present invention;
FIG 15 is another schematic view of the media stream controlling system according to the embodiment of the present invention;
FIG 16 is still another schematic view of the media stream controlling system according to the embodiment of the present invention;
FIG 17 is a flow chart of establishing an RTSP session in the single-session mode when an RPF and an AS are co-installed according to a twelfth embodiment of the present invention;
FIG 18 is a flow chart of establishing an RTSP session in the single-session mode when an RPF and a PSS server are co-installed according to a thirteenth embodiment of the present invention;
FIG 19 is a flow chart of establishing an RTSP session in the multi-session mode when an RPF and a PSS server are co-installed according to a fourteenth embodiment of the present invention;
FIG 20 is a structural view of a media stream controlling system in an IP packet network according to an embodiment of the present invention;
FIG 21 is a structural view of a checking unit according to an embodiment of the present invention;
FIG 22 is a switching unit according to an embodiment of the present invention;
FIG 23 is a structural view of a media stream controlling client in an IP packet network according to an embodiment of the present invention;
FIG 24 is a flow chart of a media stream controlling method in an IP packet network according to an embodiment of the present invention;
FIG. 25 is a flow chart of a media stream controlling method in an IP packet network according to a fifteenth embodiment of the present invention;
FIG. 26 is a flow chart of a media stream controlling method in an IP packet network according to a sixteenth embodiment of the present invention;
FIG 27 is a flow chart of a media stream controlling method in an IP packet network according to a seventeenth embodiment of the present invention;
FIG. 28 is a flow chart of a media stream controlling method in an IP packet network according to an eighteenth embodiment of the present invention;
FIG 29 is a flow chart of a media stream controlling method in an IP packet network according to a nineteenth embodiment of the present invention; and
FIG 30 is a flow chart of a media stream controlling method in an IP packet network according to a twentieth embodiment of the present invention.

### DETAILED DESCRIPTION OF THE EMBODIMENTS

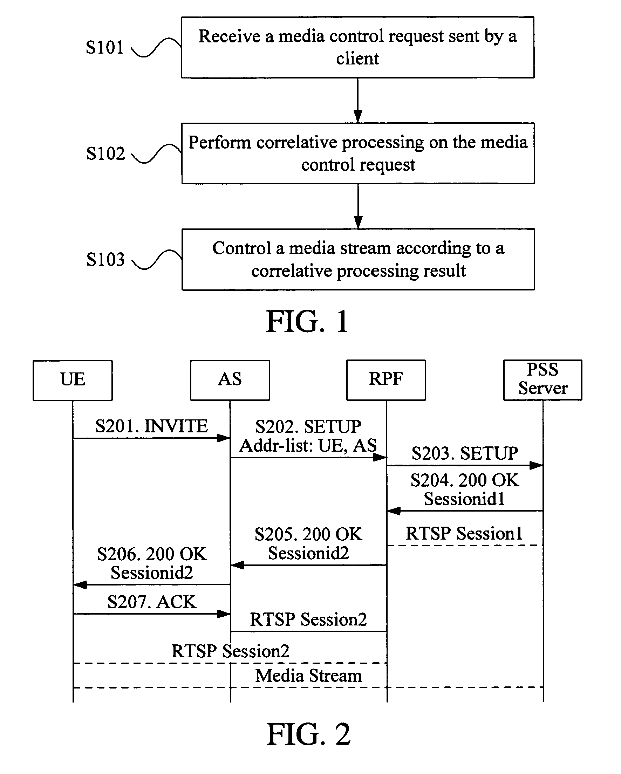

In an embodiment, the present invention provides a media stream controlling method. Referring to FIG 1, the method includes the following steps.

In step S101, a media control request sent by a client is received.

In step S102, correlative processing is performed on the media control request.

Specifically, the correlative processing includes: synchronizing the RTSP statuses of a plurality of clients; dealing with conflicts that occur during the synchronization of the RTSP statuses; and executing corresponding media control processing according to the media control request of a client. The corresponding media control processing further includes: locking or unlocking a specific RTSP session according to the media control request; or negotiating a control operation right of a specific client according to the media control request.

In step S103, a media stream is controlled according to the correlative processing result.

The implementation of the present invention is further described below with specific application scenarios.

Firstly, an RTSP session establishing method according to the present invention is described through several embodiments.

In a first embodiment, the present invention provides an RTSP session establishing method, i.e. a method that enables the establishing of an RTSP session in the single-session mode. Specifically, in this embodiment, the RTSP needs to be extended, and a header field, for example, Addr-list, is added for carrying identifiers and addresses of a plurality of clients. When an AS sends a SETUP message, the Addr-list header field, which carries identifiers and addresses of a UE and the AS, is added. An RPF receives the SETUP message, and saves the identifiers and the addresses of the UE and the AS in the Addr-list header field. If a VCR message subsequently sent by the UE or the AS to the RPF carries the identifier of the UE or the AS, the RPF may identify the sender of the VCR message, and the RPF may directly send an RTSP message to the UE or the AS according to the saved identifiers and addresses of the UE and the AS.

Referring to FIG 2, the specific process includes the following steps.

In step S201, the UE sends an INVITE message to the AS, and establishes a media stream and an RTSP session through Session Description Protocol (SDP) negotiation.

In step S202, the AS receives the INVITE message sent by the UE, constructs a SETUP message based on the RTSP according to information carried in the SDP, where the address and identifier of the UE as well as the address and identifier of the AS are carried in the message, and the AS sends the constructed SETUP message to the RPF.

In step S203, the RPF receives the SETUP message from the AS, saves the address and identifier of the UE as well as the address and identifier of the AS, constructs a new SETUP message according to content of the SETUP message, and sends the new SETUP message to a PSS server.

In step S204, the PSS server receives the SETUP message from the RPF, creates an RTSP session, RTSP Session1, assigns an RTSP session identifier, Sessionid1, and returns a 200 OK response message carrying Sessionid1 to the RPF.

In step S205, the RPF receives the 200 OK response message from the PSS server, creates an RTSP session, RTSP Session2, for the SETUP message from the AS, assigns an RTSP session identifier, Sessionid2, correlates the RTSP session identifier, Sessionid1, carried in the 200 OK response message from the PSS server with Sessionid2, and returns a 200 OK response message carrying Sessionid2 to the AS.

In step S206, the AS receives the 200 OK response message returned by the RPF, saves Sessionid2 in the message, constructs a 200 OK response message, carrying Sessionid2, of the INVITE, and sends the 200 OK response message to the UE.

In step S207, the UE returns an acknowledgement (ACK) to the AS.

After the process, the RPF acquires and saves the identifiers and the addresses of the UE and the AS. If a VCR message subsequently sent by the UE or the AS to the RPF carries the identifier of the UE or the AS, the RPF may identify the sender of the VCR message, and the RPF may directly send an RTSP message to the UE or the AS according to the saved identifiers and addresses of the UE and the AS.

Through method for establishing the RTSP session in the single-session mode according to the first embodiment, a plurality of clients is enabled to control the same media stream session. Furthermore, since a plurality of clients shares one session, the number of the sessions is reduced, and thus the burden of the server for maintaining the sessions is relieved.

In a second embodiment, the present invention provides an RTSP session establishing method, i.e. a method that enables the establishing of an RTSP session between a UE and an RPF and an RTSP session between an AS and the RPF in the multi-session mode, respectively. Specifically, the AS sends a plurality of SETUP messages for establishing a plurality of RTSP sessions to the RPF, and defines a new RTSP header field, for example, 3GPP-SETUP, including two parameters: user and ID. Each of the SETUP messages carries the 3GPP-SETUP header field. The RPF receives the SETUP messages, ascertains users of the established RTSP sessions according to the user parameter in the 3GPP-SETUP header fields, and correlates the RTSP sessions established through the SETUP messages with the same ID values according to the ID parameters of the messages.

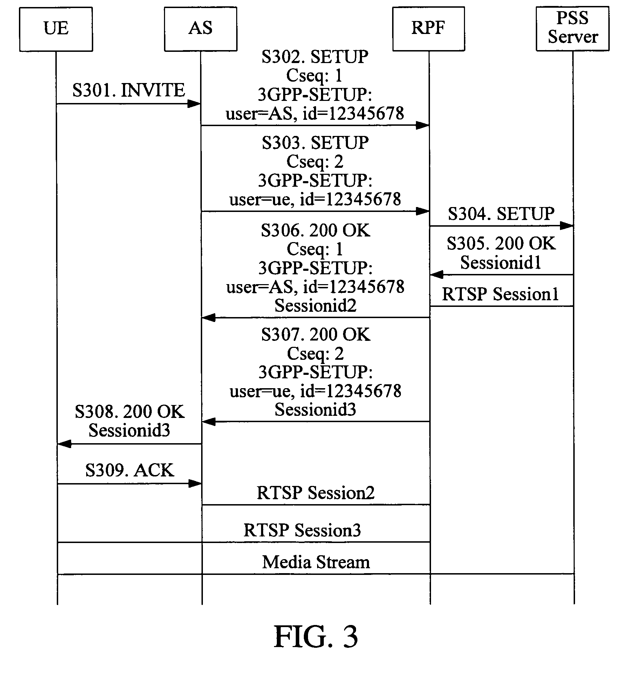

Referring to FIG 3, the specific process includes the following steps.

In step S301, the UE sends an INVITE message to the AS, and establishes a media stream and an RTSP session through SDP negotiation.

In steps S302 to S303, the AS receives the INVITE message sent by the UE, constructs two SETUP messages based on the RTSP according to information carried in the SDP, where values of the user parameters in the 3GPP-SETUP header fields of the two messages are respectively filled with AS and ue, and the ID parameters of the two messages are filled with the same value, and the AS sends the two SETUP messages to the RPF.

In step S304, the RPF receives the two SETUP messages, correlates the two SETUP messages according to the ID parameters in the 3GPP-SETUP header fields of the two messages so as to construct a new SETUP message, and sends the new SETUP message to a PSS server.

In step S305, the PSS server receives the SETUP message from the RPF, creates an RTSP session, RTSP Session1, assigns an RTSP session identifier, Sessionid1, and returns a 200 OK response message carrying Sessionid1 to the RPF.

In step S306 to s307, the RPF receives the 200 OK response message from the PSS server, creates two RTSP sessions, RTSP Session2 and RTSP Session3, for the two SETUP messages from the AS, assigns two RTSP session identifiers, Sessionid2 and Sessionid3, correlates the RTSP session identifier, Sessionid1, carried in the 200 OK response message from the PSS server with Sessionid2 and Sessionid3, and returns two 200 OK response messages respectively carrying Sessionid2 and Sessionid3 to the AS.

In step S308, the AS receives the 200 OK response messages returned by the RPF, saves Sessionid2 and Sessionid3 in the messages, constructs a 200 OK response message carrying Sessionid3 of the INVITE, and sends the 200 OK response message to the UE.

In step S309, the UE returns an ACK to the AS.

Through the process, the RPF identifies whether the sender of the messages is the UE or the AS, ascertains users of the established RTSP sessions according to the parameters in the messages, and correlates the RTSP sessions established through the SETUP messages with the same ID value according to the ID parameters of the messages.

In a third embodiment, the present invention provides a method for establishing an RTSP session, i.e. a method that enables the establishing of a plurality of RTSP sessions in the multi-session mode, that is, establishing a plurality of RTSP sessions by using one SETUP message. Specifically, the RTSP is extended, and an AS carries an instruction through a SETUP message, so as to instruct an RPF to create a plurality of RTSP sessions. Two new header fields need to be extended, for example, 3GPP-Multi-Addr and 3GPP-Multi-Session. The 3GPP-Multi-Addr header field, carried in the SETUP message, includes a list of a user parameter and an addr parameter, the user parameter represents an identifier of a client, and the addr parameter represents an address of the client. The 3GPP-Multi-Session header field is carried in a 200 OK response message of the SETUP message, and carries a list of identifiers of the established RTSP sessions.

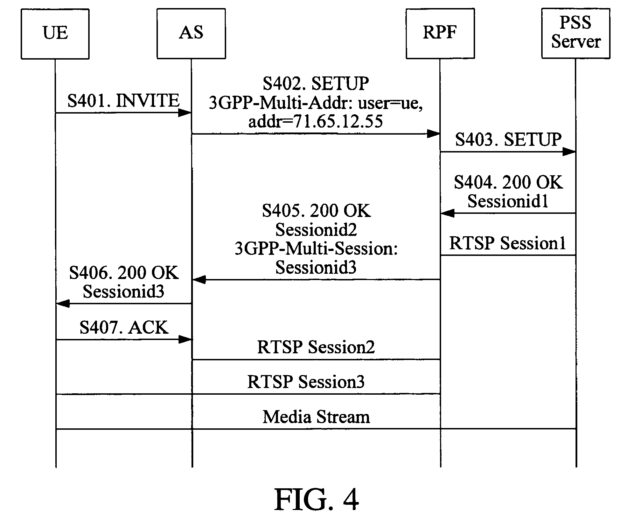

Referring to FIG 4, the specific process includes the following steps.

In step S401, the UE sends an INVITE message to the AS, and establishes a media stream and an RTSP session through SDP negotiation.

In step S402, the AS receives the INVITE message sent by the UE, constructs a SETUP message based on the RTSP according to information carried in the SDP, where the address and identifier of the UE are carried in the 3GPP-Multi-Addr of the message, and the AS sends the SETUP message to the RPF.

In step S403, the RPF receives the SETUP messages from the AS, saves the address and identifier of the UE, constructs a new SETUP message according to the content of the SETUP message, and sends the new SETUP message to a PSS server.

In step S404, the PSS server receives the SETUP message from the RPF, creates an RTSP session, RTSP Session1, assigns an RTSP session identifier, Sessionid1, and returns a 200 OK response message carrying Sessionid1 to the RPF.

In step S405, the RPF receives the 200 OK response message from the PSS server, creates two RTSP sessions, RTSP Session2 and RTSP Session3, for the SETUP message from the AS, assigns RTSP session identifiers, Sessionid2 and Sessionid3, correlates the RTSP session identifier, Sessionid1, carried in the 200 OK response message from the PSS server with Sessionid2 and Sessionid3, and returns a 200 OK response message carrying Sessionid2 and Sessionid3 to the AS.

In step S406, the AS receives the 200 OK response message returned by the RPF, saves Sessionid2 and Sessionid3 in the message, constructs a 200 OK response message carrying Sessionid3 of the INVITE message, and sends the 200 OK response message to the UE.

In step S407, the UE returns an ACK to the AS.

Through the process, the RPF may create an RTSP session respectively for the UE and the AS, so as to identify the message subsequently sent by the UE or the AS to the RPF.

In a fourth embodiment, the present invention provides an RTSP session establishment method, i.e. a method that enables the establishing of RTSP sessions in the multi-session mode, where an AS and an RPF negotiate two RTSP sessions through SIP Session Description Protocol (SDP).

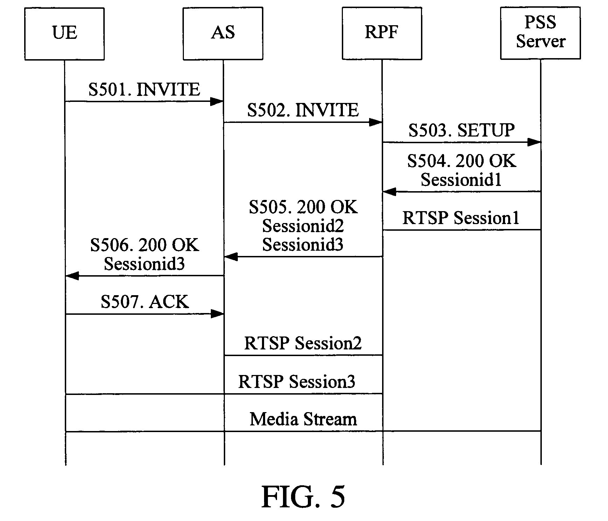

Referring to FIG 5, the specific process includes the following steps.

In step S501, a UE sends an INVITE message to the AS, and establishes a media stream and an RTSP session through SDP negotiation.

In step S502, the AS constructs a new INVITE message according to the INVITE message, which carries the content of the original SDP and is sent by the UE, as follows: the AS extends the original SDP by adding media row description of establishing the RTSP session of the AS into the original SDP to form a new SDP, and fills the content of the new SDP into the original INVITE message to form a new INVITE message. Then the AS sends the newly constructed INVITE message to the RPF.

In step S503, the RPF receives the INVITE message from the AS, constructs a SETUP message according to content of the INVITE message, and sends the STEUP message to a PSS server.

In step S504, the PSS server receives the SETUP message from the RPF, creates an RTSP session, RTSP Session1, assigns an RTSP session identifier Sessionid1, and returns a 200 OK response message carrying Sessionid1 to the RPF.

In step S505, the RPF receives the 200 OK response message from the PSS server, creates two RTSP sessions, RTSP Session2 and RTSP Session3, according to media row description of negotiating the RTSP sessions in the SDP of the INVITE message from the AS, assigns RTSP session identifiers, Sessionid2 and Sessionid3, correlates the RTSP session identifier, Sessionid1, carried in the 200 OK response message from the PSS server with Sessionid2 and Sessionid3, and returns a 200 OK response message carrying Sessionid2 and Sessionid3 to the AS.

In step S506, the AS receives the 200 OK response message returned by the RPF, saves Sessionid2 and Sessionid3 in the message, constructs a 200 OK response message carrying Sessionid3 of the INVITE, and sends the 200 OK response message to the UE.

In step S507, the UE returns an ACK to the AS.

Through the RTSP session establishment methods in the multi-session mode according to the second to fourth embodiments, a plurality of clients is enabled to control the same media stream session, and each client controls the media stream session by using an individual RTSP session, so that the RPF may differentiate the clients through the RTSP sessions, which is easy to implement.

In a fifth embodiment, the present invention provides a media stream control method, where a UE exercises VCR control through an RTSP session, and an AS exercises VCR control through an SIP session.

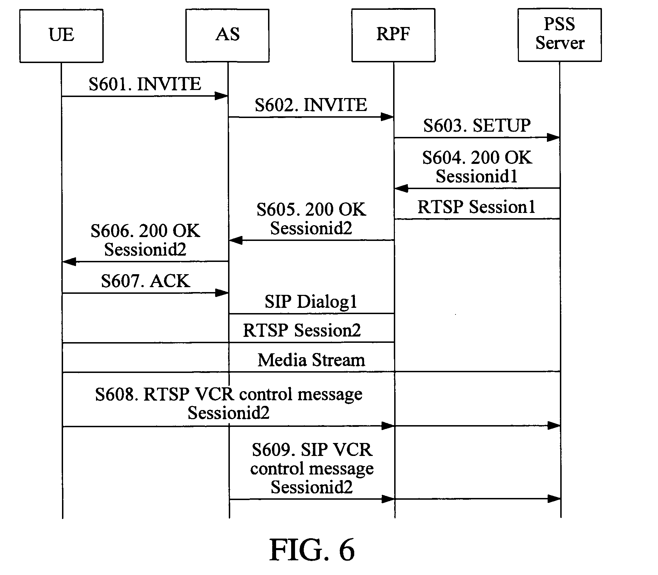

Referring to FIG 6, the specific process includes the following steps.

In step S601, the UE sends an INVITE message to the AS, and establishes a media stream and an RTSP session through SDP negotiation.

In step S602, the AS constructs a new INVITE message and a new SDP according to the INVITE message from the UE and the SDP, and sends the INVITE message to an RPF.

In step S603, the RPF receives the INVITE message from the AS, creates an SIP Dialog1, constructs a SETUP message according to content of the INVITE message, and sends the SETUP message to a PSS server.

In step S604, the PSS server receives the SETUP message from the RPF, creates an RTSP session, RTSP Session 1, assigns an RTSP session identifier, Sessionid1, and returns a 200 OK response message carrying Sessionid1 to the RPF.

In step S605, the RPF receives the 200 OK response message from the PSS server, creates an RTSP session, RTSP Session2, according to media row description of negotiating the RTSP session in the SDP of the INVITE message from the AS, assigns an RTSP session identifier, Sessionid2, correlates the RTSP session identifier, Sessionid1, carried in the 200 OK response message from the PSS server with Sessionid2, correlates Sessionid1 and Sessionid2 with the SIP Dialog1, and returns a 200 OK response message carrying Sessionid2 to the AS.

In step S606, the AS receives the 200 OK response messages returned by the RPF, constructs a 200 OK response message carrying Sessionid2 of the INVITE, and sends the 200 OK response message to the UE.

In step S607, the UE returns an ACK to the AS.

In step S608, the UE sends a VCR message based on the RTSP to the RPF through RTSP Session2, and the RPF forwards the VCR message to the PSS server through RTSP Session1.

In step S609, the AS sends a VCR message in an SIP format to the RPF through the SIP Dialog1, and the RPF converts the VCR message in the SIP format to a VCR message in an RTSP format and forwards the VCR message in the RTSP format to the PSS server through RTSP Session1.

Through the media stream control method of the fifth embodiment, different clients (for example, the UE or the AS) are enabled to control the media stream in different session modes.

The correlative processing of the RPF is introduced in detail below through several embodiments.

In a sixth embodiment, the present invention provides an RTSP session locking/unlocking method, where an AS instructs an RPF to lock or unlock a certain or a plurality of RTSP sessions. Specifically, for an unlocked RTSP session, the RPF agrees to execute an operation indicated in a VCR message for the RTSP session; and for a locked RTSP session, the RPF rejects to execute an operation indicated in the VCR message for the RTSP session. The AS may send an RTSP message or an SIP message, carrying a session identifier of locking or unlocking the RTSP session, to the RPF. The RPF receives the locking/unlocking message, and executes the locking/unlocking function. When the RTSP session is locked, the RPF receives the VCR message sent through the RTSP session, rejects to execute an operation indicated in the VCR message, and returns an error response, for example, 510, notifying the sender of the VCR message that the RTSP session is already locked.

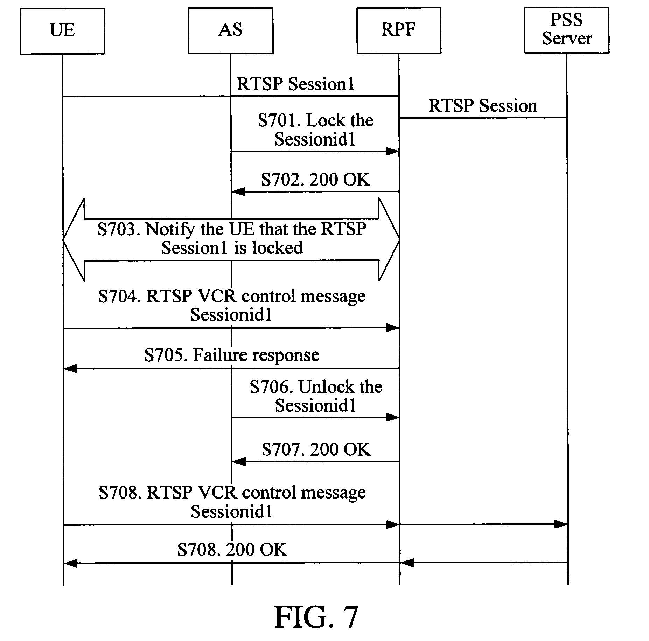

Referring to FIG 7, the specific process includes the following steps.

In step S701, the AS sends a locking message to the RPF, so as to instruct the RPF to lock an RTSP session, RTSP Session1 corresponding to Sessionid1.

In step S702, the RPF receives the locking message from the AS, locks RTSP Session1, and returns a 200 OK response message to the AS.

In step S703, the UE receives a notification message that RTSP Session1 is locked. It may be the RPF or the AS that sends the notification message to the UE.

In step S704, when RTSP Session1 is locked, the UE sends a VCR message to the RPF through RTSP Session1.

In step S705, the RPF receives the VCR message of the UE, checks and finds that RTSP Session1 is already locked, and returns a failure response to the UE (for example, a response code may be 510), so as to notify the UE that RTSP Session1 is already locked.

In step S706, the AS sends an unlocking message to the RPF, so as to instruct the RPF to unlock RTSP Session1 corresponding to Sessionid1.

In step S707, the RPF receives the unlocking message from the AS, unlocks RTSP Session1, and returns a 200 OK response message.

In step S708, the UE sends a VCR message to the RPF through RTSP Session1, and the RPF checks that RTSP Session1 is already unlocked, executes an operation indicated in the VCR message, and returns a 200 OK response message to the UE.

Through the method of the sixth embodiment, the RTSP session is locked or unlocked, and thus a more flexible manner of controlling the media stream is provided.

In a seventh embodiment, the present invention provides a client right controlling method, where an AS delivers policies to an RPF, so as to control the right of the client for executing certain VCR operations. Specifically, the AS sends policies of controlling VCR operations of a certain client to the RPF through an SIP message or an RTSP message, where the policies include whether to allow the client to perform fast forward, fast reverse, pause, quick location, and record.

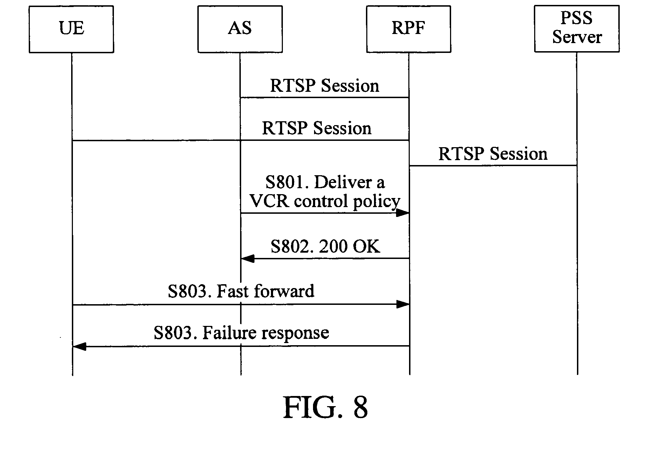

Referring to FIG 8, the specific process includes the following steps.

In step S801, the AS delivers a VCR control policy to the RPF, so as to instruct the RPF to forbid the UE to perform the VCR operation of fast forward.

In step S802, the RPF receives and saves the VCR control policy delivered by the AS.

In step S803, the UE sends a VCR message of fast forward to the RPF, and the RPF rejects to execute an operation indicated in the fast forward message from the UE according to the locally saved policy and returns a failure response (for example, 512) to the UE, so as to notify the UE that an operation indicated in the message is rejected from being executed.

In an eighth embodiment, the present invention provides a method for negotiating a VCR control right between a client and an RPF. Specifically, before initiating VCR control, the client needs to negotiate with the RPF to acquire the control right over the VCR operation. After completing the VCR control, the client actively releases the VCR control right. The RPF may actively retract the VCR control right of the client. If the client sends a VCR control message to the RPF before acquiring the VCR control right, the RPF returns a failure response, and notifies the client that the client does not have the control right. The RPF may set a policy to control which clients may acquire the VCR control, and the levels of the clients may be set in the policy, so that the client with a high priority may seize the VCR control right from the client with a low priority.

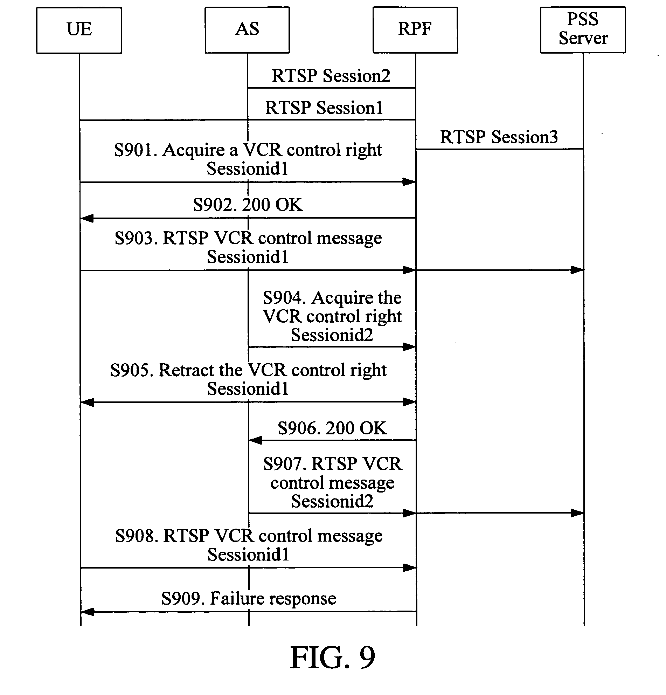

Referring to FIG 9, in the specific process, it is assumed that a UE establishes an RTSP session, RTSP Session1, with the RPF, an AS establishes an RTSP session, RTSP Session2, with the RPF, and the RPF establishes an RTSP session, RTSP Session3 with a PSS server. In the RPF, RTSP Session1, RTSP Session2, and RTSP Session3 are correlated with one another. The process includes the following steps.

In step S901, the UE interacts with the RPF, carries a Session ID, Sessionid1, in an interaction message, and requests to acquire the VCR control right on RTSP Session1.

In step S902, the RPF checks the locally configured policy, allows the UE to acquire the VCR control right over RTSP Session1, and returns a 200 OK response message.

In step S903, the UE acquires the VCR control right and initiates a VCR control operation through RTSP Session1, and the RPF sends a VCR control message on RTSP Session1 to the PSS server for processing through RTSP Session3.

In step S904, the AS interacts with the RPF, carries a Session ID, Sessionid2, in an interaction message, and requests to acquire a VCR control right over RTSP Session2.

In step S905, the RPF checks a locally configured policy, finds that the level of the AS is higher than the UE, and allows the AS to seize the VCR control right of the UE; and the RPF interacts with the UE and retracts the VCR control right of the UE.

In step S906, the RPF returns a 200 OK response message to the AS, so as to notify the AS that the control right is successfully acquired.

In step S907, the AS acquires the VCR control right and initiates an VCR control operation through RTSP Session2, and the RPF sends a VCR control message on RTSP Session2 to the PSS server for processing through RTSP Session3.

In step S908, during the control of the AS, the RPF receives the VCR control message sent by the UE through RTSP Session1.

In step S909, the RPF returns a failure response (for example, 511) to the UE, so as to notify the UE that the UE does not have the VCR control right.

In a ninth embodiment, the present invention provides a method for negotiating a VCR control right between clients. Specifically, the clients are peers, the client acquiring the VCR control right is a main control client, and the client without the VCR control right is a common client. Before initiating a VCR operation, the common client needs to interact with the main control client, so as to acquire the VCR control right. After acquiring the VCR control right and becoming the main control client, the common client needs to notify other clients.

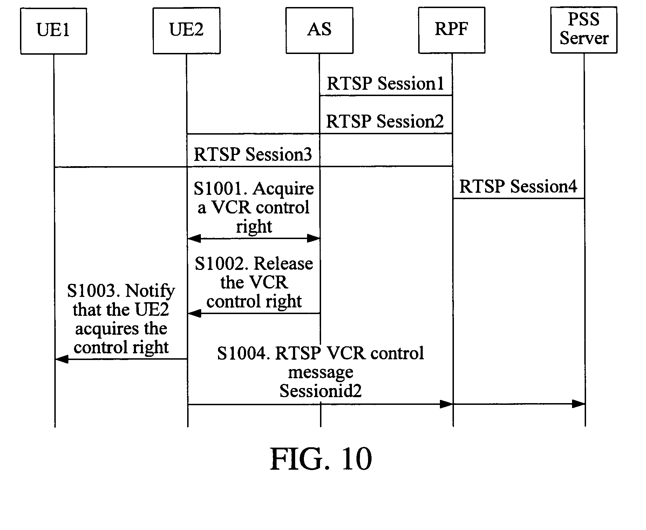

Referring to FIG 10, the specific process includes the following steps.

In step S1001, an AS is currently a main control client. A UE2 interacts with the AS, and requests for acquiring a VCR control right.

In step S1002, the AS releases the VCR control right to the UE2, and the UE2 becomes a main control client.

In step S1003, the UE2 notifies a UE1 that the UE2 has acquired the VCR control right.

In step S1004, the UE2 sends a VCR control message to an RPF through an RTSP session, RTSP Session2, and the RPF sends the VCR control message on RTSP Session2 to a PSS server for processing through an RTSP session, RTSP Session4.

Through the methods provided in the seventh to ninth embodiments, the control over the control rights of different clients is realized, and a plurality of clients is enabled to correspondingly control a media stream according to their different rights.

In a tenth embodiment, the present invention provides a method for synchronizing statuses of clients. Specifically, a client receives a success response after sending a VCR message to an RPF, so that an RTSP status is changed. The client sends a notification message to other clients to notify the other clients of the latest RTSP status, and the clients receiving the notification message update local RTSP statuses according to the latest RTSP status in the notification. The block mode and the non-block mode may be configured on the RPF. When the block mode is configured, after successfully executing an operation indicated in a VCR message resulting in the change of the RTSP status, the RPF enters a block status and does not execute operations indicated in the subsequent VCR messages any longer, until receiving an RTSP status synchronization complete indication message from the client, or until a block timer times out. When the non-block mode is configured, the RPF executes operations indicated in the subsequent VCR messages in sequence.

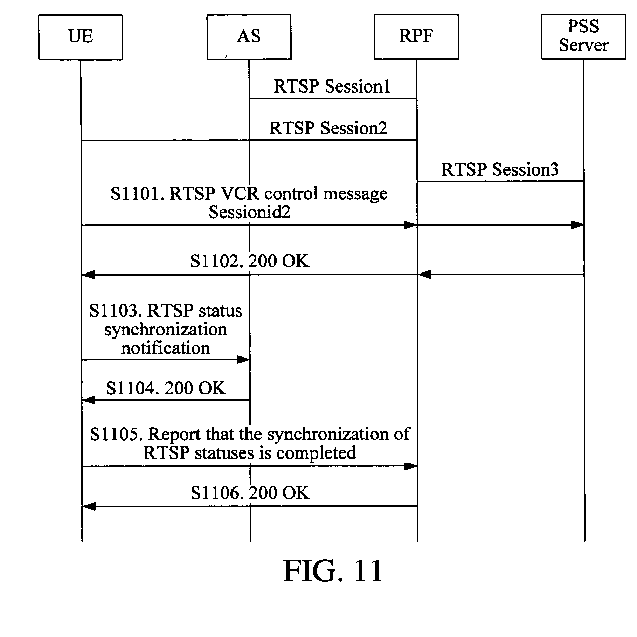

Referring to FIG 11, the specific process includes the following steps.

In step S1101, a UE sends a VCR control message to the RPF.

In step S1102, the RPF successfully executes an operation indicated in the VCR control message from the UE, so that the status of an RTSP server end on the RPF is changed. After returning a 200 OK response message to the UE, the RPF executes the block mode according to the configuration (when the block timer times out, or the RPF receives an RTSP status synchronization complete message sent by the UE, the RPF releases the block).

In step S1103, the UE receives the 200 OK response message of the RPF. According to the RTSP, the status of the RTSP client on the UE is changed. The UE sends the changed status to the AS through a notification message.

In step S 1104, the AS receives the status notification message from the UE, updates the local status of the RTSP client, and returns a 200 OK response message to the UE.

In step S1105, the UE receives the 200 OK response message from the AS, confirms that the AS has successfully updated the status, and sends a message to the RPF to report that the synchronization of the RTSP statuses is completed.

In step S1106, the RPF receives the message from the UE, releases the block status, and returns a 200 OK response message to the UE.

In an eleventh embodiment, the present invention provides a method for performing status synchronization controlled by an RPF. Specifically, the RPF successfully executes an operation indicated in a VCR message of a client to result in a change of an RTSP status, and the RPF sends a status synchronization notification message to the other relevant clients. After receiving the notification message, the other clients update local RTSP statuses according to the RTSP status in the message. The block mode and the non-block mode may be configured on the RPF. When the block mode is configured, after successfully executing an operation indicated in a VCR message resulting in the change of the RTSP status, the RPF enters a block status and does not execute operations indicated in the subsequent VCR messages any longer, until the synchronization of the RTSP statuses of all the relevant clients is completed, or until a block timer times out. When the non-block mode is configured, the RPF executes operations indicated in the subsequent VCR messages in sequence.

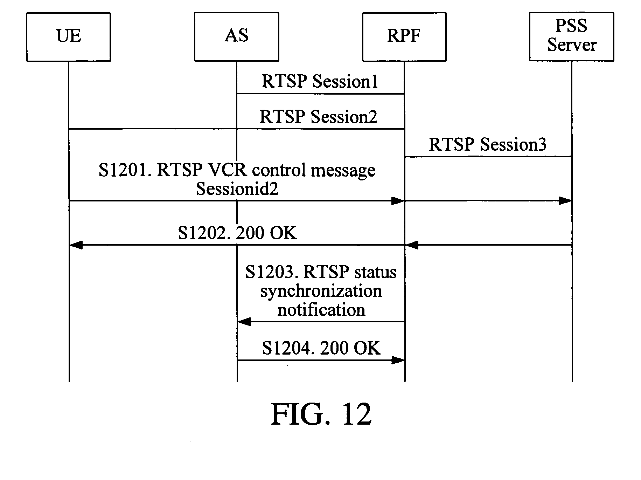

Referring to FIG 12, the specific process includes the following steps.

In step S1201, a UE sends a VCR control message to the RPF.

In step S1202, the RPF successfully executes an operation indicated in the VCR control message from the UE, so that the status of an RTSP server end on the RPF is changed. After returning a 200 OK response message to the UE, the RPF executes the block mode according to the configuration (when the block timer times out, or the RPF receives a success response of an RTSP status synchronization notification message sent by an AS, the RPF releases the block).

In step S1203, the RPF sends the RTSP status synchronization notification message to the AS.

In step S1204, the AS receives the status synchronization notification message from the RPF, updates the local status of the RTSP client, and returns a 200 OK response message to the RPF.

Through the methods provided in the tenth and eleventh embodiments, the synchronization of RTSP statuses of different clients is realized, so as to prevent the problem that the RTSP statuses are asynchronous when the plurality of clients simultaneously controls a media stream.

In the above embodiments of the present invention, the implementation of the present invention is described by taking a UE and an AS serving as different clients as an example. In practical applications, the embodiments of the present invention may be applied in a network including a plurality of UEs or a plurality of ASs. The implementation of the present invention in the network including a plurality of UEs or a plurality of ASs is similar to that of the above-mentioned embodiments, so the details will not be described herein again.

Through the methods provided in the embodiments of the present invention, the RPF is introduced into the network and performs correlative processing on the media control request, so that the plurality of clients is enabled to control the same media stream, and thus the problem that the RTSP statuses are asynchronous when the plurality of clients simultaneously controls the media stream is solved. In addition, the session locking/unlocking function and the solution for negotiating the control rights of the clients are provided, so that the control over the operations of the clients is realized in the network, and more flexible services are provided.

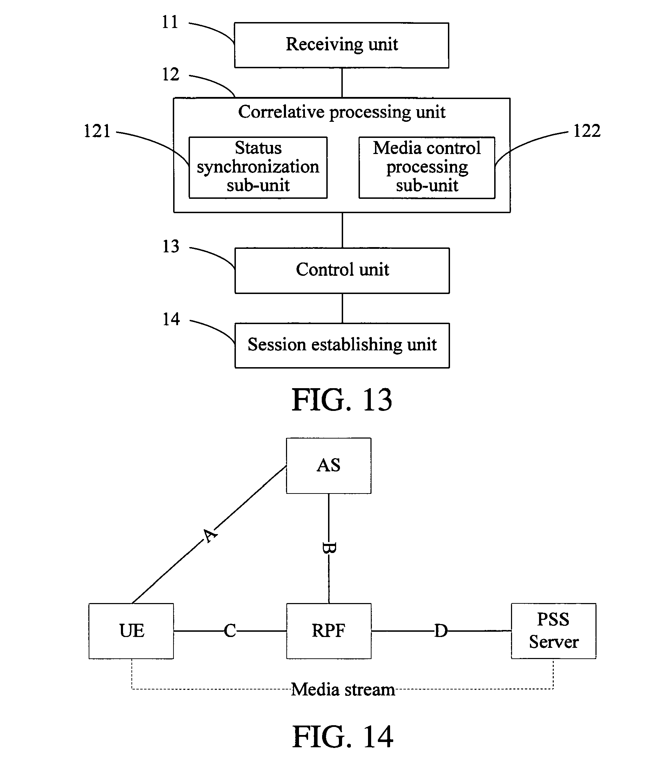

In an embodiment, the present invention further provides a network logic entity, configured to control a media stream. Specifically, the network logic entity may be an RPF. The RPF is connected to a plurality of clients (an AS and/or a UE) in a network. The RPF establishes sessions with the plurality of clients (SIP sessions or RTSP sessions), correlates and manages the sessions with the plurality of clients, acts as an agent for VCR control messages sent by the plurality of clients, controls the sending of the VCR messages of the clients, and synchronizes RTSP statuses of the plurality of clients. Referring to FIG 13, the RPF includes a receiving unit 11, a correlative processing unit 12, a controlling unit 13, and a session establishing unit 14.

The receiving unit 11 is configured to receive a media control request sent by a client.

The correlative processing unit 12 is configured to perform correlative processing on the media control request received by the receiving unit. The correlative processing unit 12 further includes: a status synchronizing sub-unit 121, configured to synchronize RTSP statuses of different clients; and a media control processing sub-unit 122, configured to lock or unlock a specific RTSP session according to the media control request, or negotiate a control operation right of the specific client according to the media control request.

The control unit 13 is configured to control the media stream according to a correlative processing result of the correlative processing unit.

The session establishing unit 14 is configured to establish an RTSP session or an SIP session with the client in the single-session mode or the multi-session mode.

The position of the RPF in the network may have the following networking architectures.

Referring to FIG 14, the RPF may exist in the network as an individual network entity. Here, the RPF is connected to the UE through an interface A, connected to the AS through an interface B, and connected to a PSS server through an interface D.

Specifically, the UE has the following functions. The UE is capable of controlling establishment and release of the RTSP session and the media stream through SIP interaction in a signaling plane with the AS, and receiving an RTSP status synchronization notification message from the RPF or the AS and updating the local RTSP status according to the status notified by the message. In addition, the UE is also capable of requesting for control over the media stream, sending a status synchronization notification message to the AS, and reporting to the RPF that the synchronization of the RTSP statuses is completed.

Specifically, the AS has the following functions. The AS is capable of establishing an RTSP session with the RPF for the UE, locking or unlocking the RTSP session between the UE and the RPF, sending an RTSP session locking/unlocking notification to the UE, delivering a policy to the RPF, and controlling a VCR operation capable of being executed by the UE. In addition, the AS is capable of establishing an SIP session with the RPF, sending an RTSP status synchronization notification to the UE, reporting to the RPF that the synchronization of the RTSP statuses is completed, receiving a status synchronization notification from the RPF or the UE and changing the RTSP status of itself accordingly, and requesting to control the media stream.

Specifically, the RPF has the structure as described in FIG 13, and has the following functions.

A session control function: The RPF is capable of receiving an RTSP session setup request from the AS, establishing RTSP sessions between the AS, the UE and the RPF as well as RTSP sessions between the RPF, the AS and the UE, serving as an intermediate node to establish the RTSP session with the PSS server according to the session setup request from the AS, and correlating the RTSP sessions established among the AS, the UE, and the PSS server;

A status synchronization control function: The RPF is capable of sending an RTSP status synchronization notification to the UE and the AS, so as to synchronize the RTSP statuses on the UE and the AS. During the status synchronization, execution policies on the RPF are divided into the block mode and the non-block mode. In the block mode, after successfully executing an operation indicated in a VCR message resulting in the change of the RTSP status, the RPF enters a block status, releases the block after the block timer times out or confirming that the RTSP statuses on the UE and the AS are successfully synchronized, and starts to execute an operation indicated in a subsequent VCR message. The non-block mode is opposite to the block mode, and in the non-block mode, no block occurs when an operation indicated in the VCR message is executed;

A VCR control function, the RPF is capable of receiving an RTSP message sent by the AS or the UE and forwarding the RTSP message to the PSS server, receiving an RTSP message actively sent by the PSS Serve and forwarding the RTSP message to the UE or the AS according to the logic and the session status on the RPF, locking or unlocking the RTSP session of the UE according to a request of the AS, and exercising policy control over the VCR message from the UE according to a control policy delivered by the AS; and

An optical function: The RPF is capable of negotiating with the AS to establish an SIP session, receiving a VCR command in the form of an SIP message, and converting the VCR command in the form of the SIP message to a VCR command in the form of an RTSP message.

Specifically, the functions of the PSS server are the same as the functions of the PSS server in the prior art.

In a circumstance as shown in FIG 14, the functions of each interface are as follows:

The interface A is an interface between the UE and the AS, which adopts the SIP to implement RTSP session establishment through SIP negotiation. In addition, the synchronization of RTSP statuses of the UE and the AS is realized through the interface A.

The interface B is an interface between the AS and the RPF, which adopts the RTSP to implement RTSP session establishment, VCR control, locking/unlocking control, and VCR control policy delivery. In addition, the SIP is added between the AS and the RPF, the AS and the RPF establish an SIP session, and the AS exercises VCR control, locking/unlocking control, and VCR control policy delivery through the SIP.

The interface C is an interface between the UE and the RPF, which adopts the RTSP.

The interface D is an interface between the RPF and the PSS server, which adopts the RTSP

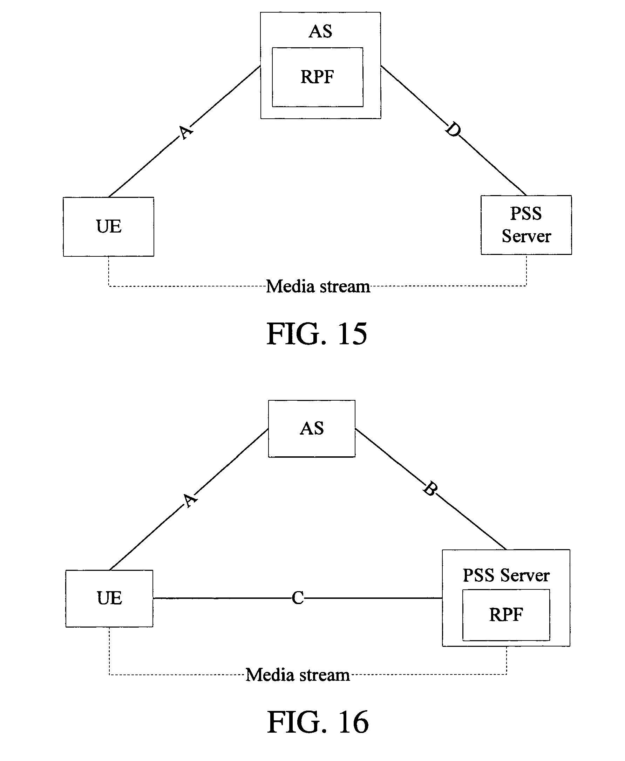

In addition, referring to FIG 15, the RPF may be located on the AS. Here, the RPF/AS is connected to the UE through the interface A, and connected to the PSS server through the interface D.

Specifically, the UE has the following functions. The UE is capable of controlling establishment and release of the RTSP session and the media stream through SIP interaction in a signaling plane with the AS, receiving an RTSP status synchronization notification message from the AS and updating the local RTSP status according to the status notified by the message, and requesting to control the media stream. In addition, the UE is also capable of sending a status synchronization notification message to other UEs, and reporting to the AS that the synchronization of the RTSP statuses is completed.

Specifically, the AS (with an embedded RPF) has the following functions:

The session control function: The AS is capable of establishing an RTSP session with the UE through SIP negotiation, establishing an RTSP session with the PSS server according to the RTSP session established with the UE and correlating the RTSP sessions established with the UE and the PSS server, locking or unlocking the RTSP session with the UE, sending an RTSP session locking/unlocking notification to the UE, and controlling a VCT operation capable of being executed by the UE;

The status synchronization control function: The AS is capable of sending an RTSP status synchronization notification to the UE, so as to synchronize the RTSP statuses on the UE. During the status synchronization, execution policies on the AS are divided into the block mode and the non-block mode. In the block mode, after successfully executing an operation indicated in a VCR message resulting in the change of the RTSP status, the AS enters a block status, releases the block after the block timer times out or confirming that the RTSP statuses of the UE are successfully synchronized, and starts to execute an operation indicated in a subsequent VCR message. The non-block mode is opposite to the block mode, and in the non-block mode, no block occurs when an operation indicated in the VCR message is executed; and

The VCR control function: The AS is capable of receiving an RTSP message sent by the UE and forwarding the RTSP message to the PSS server, receiving an RTSP message actively sent by the PSS Serve and forwarding the RTSP message to the UE according to the logic and the session status on the AS, locking or unlocking the RTSP session of the UE according to a service logic, and exercising policy control on the VCR message from the UE according to a locally configured control policy.

The structure of the RPF is as described in FIG 13.

Specifically, the functions of the PSS server are the same as the functions of the PSS server in the prior art.

In a circumstance as shown in FIG 15, the functions of each interface are as follows:

The interface A is an interface between the UE and the AS, which adopts the SIP and the RTSP to implement RTSP session establishment through SIP negotiation and realize VCR control and RTSP status synchronization.

The interface D is an interface between the RPF and the PSS server, which adopts the RTSP.

In addition, referring to FIG 16, the RPF may also be located on the PSS server. Here, the RPF/PSS server is connected to the UE through the interface C, and connected to the AS through the interface B.

Specifically, the UE has the following functions. The UE is capable of controlling establishment and release of the RTSP session and the media stream through SIP interaction in a signaling plane with the AS, receiving an RTSP status synchronization notification message from the PSS server and updating the local RTSP status according to the status notified by the message, and requesting to control the media stream. In addition, the UE is also capable of sending a status synchronization notification message to other UEs, and reporting to the PSS server that the synchronization of the RTSP statuses is completed.

Specifically, the AS has the following functions. The AS is capable of establishing an RTSP session with the PSS server for the UE, locking or unlocking the RTSP session between the UE and the PSS server, sending an RTSP session locking/unlocking notification to the UE, delivering a policy to the PSS server, and controlling a VCR operation capable of being executed by the UE.

Specifically, the PSS server (with an embedded RPF) has the following functions.

The session control function: The PSS server is capable of receiving an RTSP session setup request from the AS, establishing an RTSP session between the PSS server and the AS and establishing an RTSP session between the PSS server and the UE (the RTSP sessions between the PSS server and the AS and between the PSS server and the UE may be the same session, or two independent sessions), identifying the AS and the UE through identifiers if the AS and the UE share one session, and correlating and managing the two sessions if the AS and the UE use two independent sessions;

The status synchronization control function: The PSS server is capable of sending an RTSP status synchronization notification to the UE and the AS, so as to synchronize the RTSP statuses on the UE and the AS. During the status synchronization, execution policies on the PSS server are divided into the block mode and the non-block mode. In the block mode, after successfully executing an operation indicated in a VCR message resulting in the change of the RTSP status, the PSS server enters a block status, releases the block after the block timer times out or confirming that the RTSP statuses on the UE and the AS are successfully synchronized, and starts to execute an operation indicated in a subsequent VCR message. The non-block mode is opposite to the block mode, and in the non-block mode, no block occurs when an operation indicated in the VCR message is executed; and

The VCR control function: The PSS server is capable of receiving an RTSP message sent by the AS or the UE and executing an operation indicated in the RTSP message, locking or unlocking the RTSP session of the UE according to a request of the AS, and exercising policy control over the VCR message from the UE according to a control policy delivered by the AS.

In a circumstance as shown in FIG 16, the functions of each interface are as follows:

The interface A is an interface between the UE and the AS, which adopts the SIP to implement RTSP session establishment through SIP negotiation. In addition, the synchronization of RTSP statuses between the UE and the AS is realized through the interface A.

The interface B is an interface between the AS and the PSS server, which adopts the RTSP to implement RTSP session establishment and realize VCR control, locking/unlocking control, and VCR control policy delivery.

The interface C is an interface between the UE and the PSS server, which adopts the RTSP to realize VCR control and RTSP status synchronization.

Through the system and the logic entity provided in the embodiments of the present invention, the RPF is introduced in the network and performs correlative processing on the media control request, so that the plurality of clients is enabled to control the same media stream. In this way, the problem that the RTSP statuses are asynchronous when the plurality of clients simultaneously controls the media stream is solved. In addition, the session locking/unlocking function and the solution for negotiating the control rights of the clients are provided, so that the control on the operations of the clients is realized in the network, and more flexible services are provided.

In the first to eleventh embodiments of the present invention, the implementation of the present invention is described by taking the RPF serving as an independent entity in the network as an example. When the RPF and the AS are co-installed, or the RPF and the PSS server are co-installed, the method of the first to eleventh embodiments may still be applied. Typical embodiments in which the RPF and the AS are co-installed, or the RPF and the PSS server are co-installed are provided in the following.

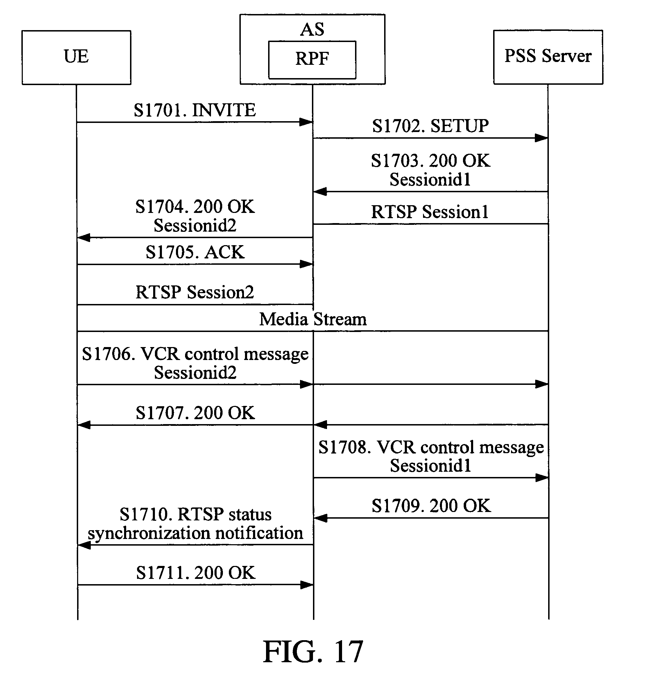

In a twelfth embodiment of the present invention, a flow chart of establishing an RTSP session in the single-session mode according to the present invention is described by taking a scenario that an RPF and an AS are co-installed as an example. Referring to FIG 17, the process includes the following steps.

In step S1701, a UE sends an INVITE message to the AS, and establishes a media stream and an RTSP session through SDP negotiation.

In step S1702, the AS receives the INVITE message sent by the UE, constructs a SETUP message based on the RTSP according to information carried in the SDP, and sends the SETUP message to a PSS server.

In step S1703, the PSS server receives the SETUP message from the AS, creates an RTSP session, RTSP Session1, assigns an RTSP session identifier, Sessionid1, and returns a 200 OK response message carrying Sessionid1 to the AS.

In step S 1704, the AS receives the 200 OK response message from the PSS server, creates an RTSP session, RTSP Session2, for the INVITE message from the UE, assigns an RTSP session identifier, Sessionid2, correlates the RTSP session identifier, Sessionid1, carried in the 200 OK response message from the PSS server with Sessionid2, and returns a 200 OK response message carrying Sessionid2 to the UE.

In step S 1705, the UE returns an ACK to the AS.

In step S1706, the UE sends a VCR message based on the RTSP to the AS through RTSP Session2, and the AS forwards the VCR message to the PSS server through RTSP Session1.

In step S 1707, the PSS server receives and executes an operation indicated in the VCR message from the AS and returns a 200 OK response message through RTSP Session1, and the AS forwards the 200 OK response message returned by the PSS server to the UE through RTSP Session2.

In step S1708, the AS sends the VCR message to the PSS server through RTSP Session1, and controls the media stream between the PSS server and the UE, so that an RTSP status is changed.

In step S1709, the PSS server receives and executes an operation indicated in the VCR message from the AS, and returns a 200 OK response message.

In step S 1710, the AS sends an RTSP status synchronization notification to the UE.

In step S 1711, the UE receives the RTSP status synchronization notification message from the AS, updates a local RTSP status, and returns a 200 OK response message.

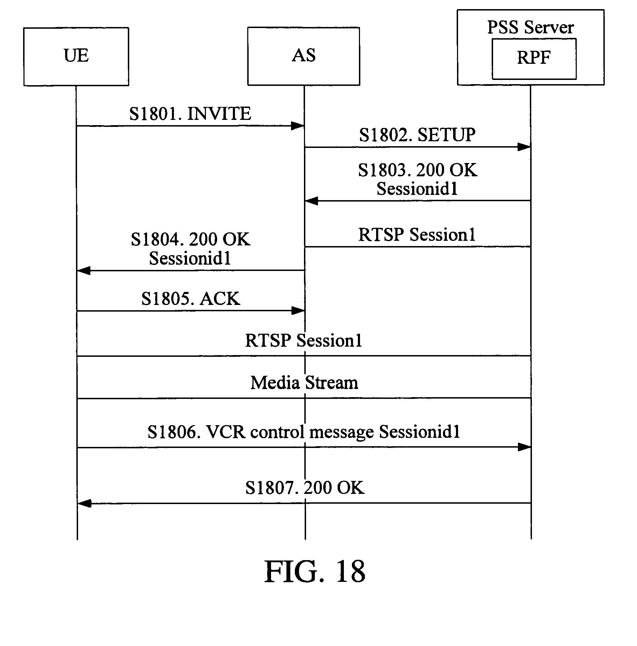

In a thirteenth embodiment of the present invention, a flow chart of establishing an RTSP session in the single-session mode according to the present invention is described by taking a scenario that an RPF and a PSS server are co-installed as an example. Referring to FIG 18, the process includes the following steps.

In step S1801, a UE sends an INVITE message to an AS, and establishes a media stream and an RTSP session through SDP negotiation.

In step S1802, the AS receives the INVITE message sent by the UE, constructs, according to information carried in the SDP, a SETUP message based on the RTSP, and sends the SETUP message to the PSS server.

In step S1803, the PSS server receives the SETUP message from the AS, creates an RTSP session, RTSP Session1, assigns an RTSP session identifier, Sessionid1, creates a media stream control instance and assigns a control instance identifier 1, correlates Sessionid1 with the control instance identifier 1, and returns a 200 OK response message carrying Sessionid1 to the AS.

In step S1804, the AS receives the 200 OK response message from the PSS server, extracts the RTSP session identifier, Sessionid1, carried in the 200 OK response message from the PSS server, and returns a 200 OK response message carrying Sessionid1 to the UE.

In step S1805, the UE returns an ACK to the AS.

In step S1806, the UE sends a VCR control message to the PSS server through RTSP Session1.

In step S1807, the PSS server receives the VCR control message from the UE, finds the media stream control instance according to Sessionide1, executes control processing, and returns a 200 OK response message to the UE.

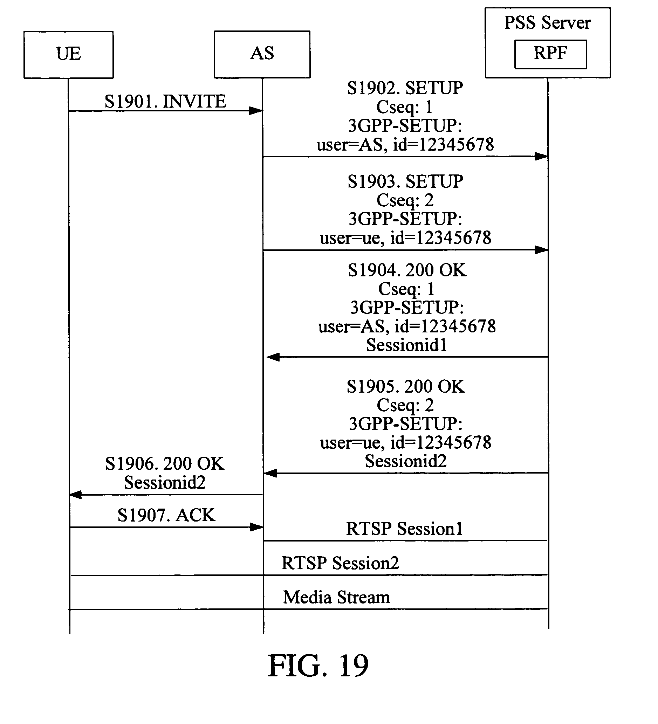

In a fourteenth embodiment of the present invention, a flow chart of establishing an RTSP session in the multi-session mode according to the present invention is described by taking a scenario that an RPF and a PSS server are co-installed as an example. Referring to FIG 19, the process includes the following steps.

In step S1901, a UE sends an INVITE message to an AS, and establishes a media stream and an RTSP session through SDP negotiation.

In steps S1902 to S1903, the AS receives the INVITE message sent by the UE, constructs, according to information carried in the SDP, two SETUP messages based on the RTSP, where values of user parameters in 3GPP-SETUP header fields of the two messages are respectively filled with AS and ue, and ID parameters of the two messages are filled with the same value, and sends the two SETUP messages to the PSS server.

In steps S 1904 to S1905, the PSS server receives the two SETUP messages, creates two RTSP sessions, RTSP Session2 and RTSP Session3, assigns two RTSP session identifiers, Sessionid1 and Sessionid2, creates a media stream control instance and assigns a control instance identifier 1, correlates the two RTSP session identifiers, Sessionid1 and Sessionid2, with the control instance identifier 1 as the values of the ID parameters in the 3GPP-SETUP header fields of the two SETUP messages are the same, and returns two 200 OK response messages respectively carrying Sessionid2 and Sessionid3 to the AS for the two received SETUP messages.

In step S1906, the AS receives the 200 OK response messages returned by the PSS server, saves Sessionid1 and Sessionid2 in the messages, constructs a 200 OK response message carrying Sessionid2 of the INVITE, and sends the 200 OK response message to the UE.

In step S 1907, the UE returns an ACK to the AS.

The present invention further provides a media stream control method, system, control right switching entity, and client in an IP packet network. According to a control right request message, a control right is switched from a control client to one of the other common clients, and thus the transfer of the control right and the enabling of the other clients to control the media stream are realized.

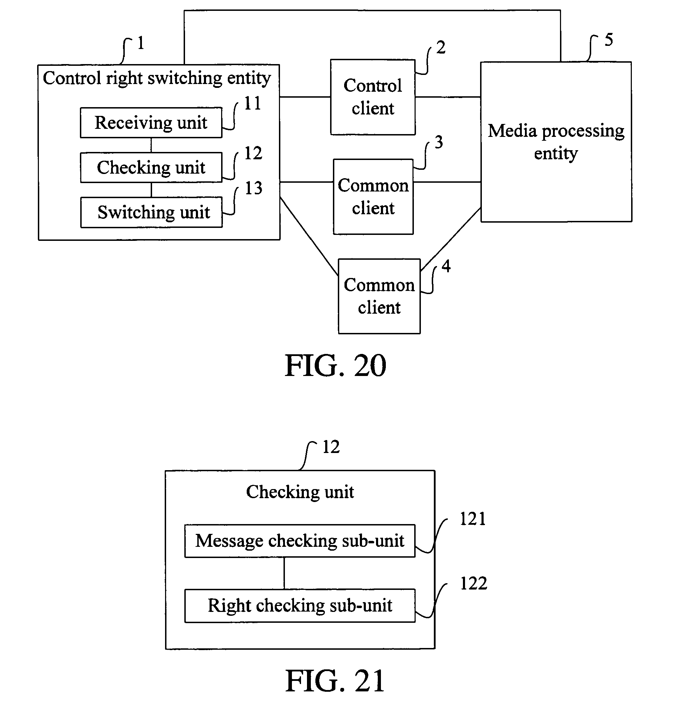

FIG 20 is a structural view of a media stream control system in an IP packet network according to an embodiment of the present invention.

It may be known from FIG 20 that the system includes a control right switching entity 1, a control client 2 with a control right, and at least one common client without a control right (including a common client terminal 3 and a common client terminal 4 in this embodiment), in which the control right switching entity 1 includes a receiving unit 11, a checking unit 12, and a switching unit 13.

The receiving unit 11 is configured to receive a control right request message sent by the control client 2 or a common client (for example, the common client 3). Specifically, the control right request message includes a control right switching message which is sent by the control client 2 and indicates that the control right needs to be handed over, or a control right acquiring message which is sent by the common client 3 and indicates that the control right needs to be acquired.

The checking unit 12 is configured to perform a validity check on the control right request message received by the receiving unit 11, where the check includes checking whether the message is correct, checking whether the control client 2 has a right to hand over the control right, and checking whether the common client 3 has a right to acquire the control right.

The switching unit 13 is configured to switch the control right from the control client 2 to the common client 3, according to the control right request message that passes the validity check performed by the checking unit 12.

Referring to FIG 21, the checking unit 12 includes a message checking sub-unit 121 and a right checking sub-unit 122.

The message checking sub-unit 121 is configured to check whether the control right request message is correct.

The right checking sub-unit 122 is configured to check whether the control client 2 has the right to hand over the control right, and check whether the common client 3 has the right to take over the control right.

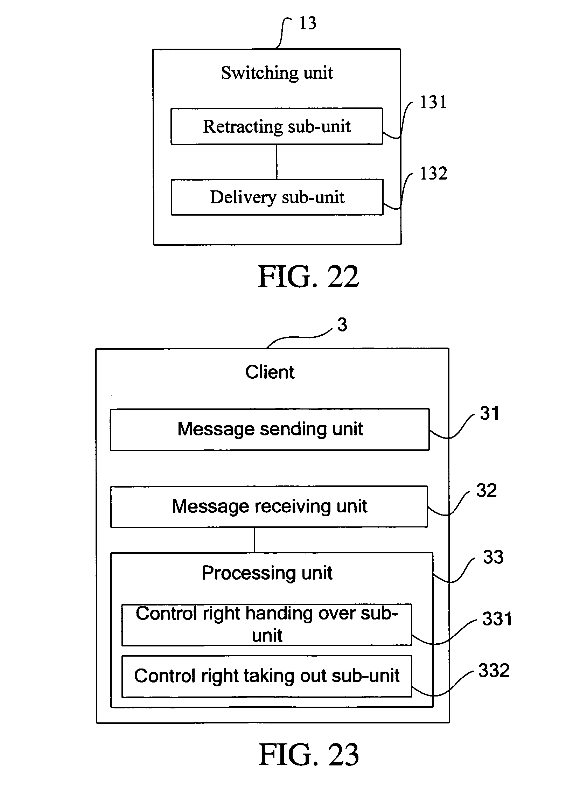

Referring to FIG 22, the switching unit 13 includes a retracting sub-unit 131 and a delivery sub-unit 132.

The retracting sub-unit 131 is configured to send an indication message which indicates that the control right of the control client needs to be retracted by altering a media control channel.

The delivery sub-unit 132 is configured to send to the common client an indication message which indicates that the control right needs to be delivered by altering the media control channel.

During the practical implementation, the system further includes a media processing entity 5.

The media processing entity 5 is configured to alter the media control channel, and retract or deliver the control right according to the indication message sent by the control right switching entity 1.

It should be noted that in the embodiments of the present invention, the client includes a UE (for example, a cell phone, a PC, or a digital television) and a network device (for example, a service control function (SCF), a media control function (MCF), or a media resource function control entity).

In an embodiment of the present invention, referring to FIG 23, a media stream control client 3 in an IP packet network includes a message sending unit 31, a message receiving unit 32, and a processing unit 33.

The message sending unit 31 is configured to send a control right request message to a control right switching entity 1, where the control right request message includes a control right switching message and a control right acquiring message.

The message receiving unit 32 is configured to receive an indication message which is returned by the control right switching entity 1 and indicates that a control right needs to be switched.

The processing unit 33 is configured to hand over the control right or take over the control right according to the indication message received by the message receiving unit 32.

The processing unit 33 includes a control right handing over sub-unit 331 and a control right taking over sub-unit 332.

The control right handing over sub-unit 331 is configured to alter a media control channel and release the control right according to the indication message received by the message receiving unit 32.

The control right taking over sub-unit 332 is configured to alter the media control channel and take over the control right according to the indication message received by the message receiving unit 32.

It should be noted that in the embodiment of the present invention, the control right switching entity 1 may be a service providing entity, for example, an SCF or an AS.

The media processing entity may be an MF or an MRF.

The message interaction of the control client, the common client, and the control right switching entity as well as the control client, the common client, and the media processing entity may be implemented through SDP interaction or SIP interaction. Specifically, the control right request message (including the control right switching message and the control right acquiring message) may be implemented by an INFO message, a MESSAGE message, a REFER message, and an INVITE message, and the indication message may be implemented by an INVITE message.

The technical solutions of the media stream control system, control right switching entity, and client in the IP packet network according to the embodiments of the present invention are described in detail above, and a technical solution of the media stream control method according to an embodiment of the present invention is described in detail below with reference to the accompanying drawings.

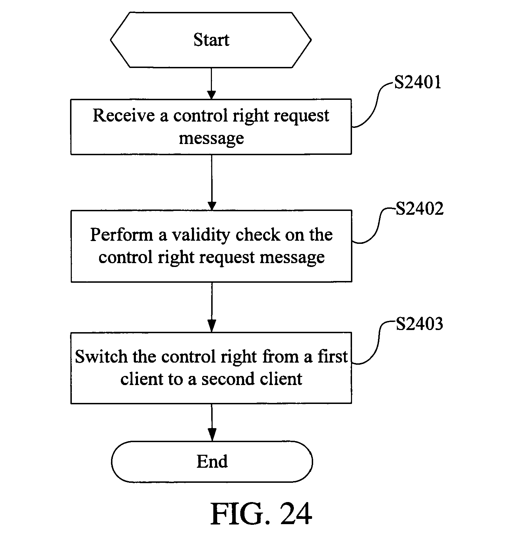

FIG 24 is a flow chart of a media stream control method in an IP packet network according to an embodiment of the present invention. Referring to FIG 24, the method includes the following steps.

In step S2401, a control right switching entity (for example, an SCF) receives a control right request message, where the control right request message includes a control right switching message which is sent by a first client with a control right and indicates that the control right needs to be switched to a second client, or a control right acquiring message which is sent by the second client and indicates that the control right needs to be acquired.

In step S2402, the control right switching entity performs a validity check on the control right request message, where the check includes checking whether the control right request message is correct, checking whether the first client has a right to hand over the control right, and/or checking whether the second client has a right to take over the control right.

In step S2403, the control right switching entity switches the control right from the first client to the second client according to the control right request message that passes the validity check.

Specifically, in step S2403, the control right switching entity sends an indication message indicating that the control right of the first client needs to be retracted by altering a media control channel and that the control right needs to be delivered to the second client by altering the media control channel.

The process of retracting the control right of the first client by altering the media control channel includes the following step.

A media control channel between the first client and a media processing entity is disabled.

Alternatively, a correlative relation of the media control channel between the first client and the media processing entity with a media stream is removed.

The process of delivering the control right to the second client by altering the media control channel includes the following step.

A media control channel between the second client and the media processing entity is enabled.

Alternatively, the media control channel between the second client and the media processing entity is correlated with a media stream.

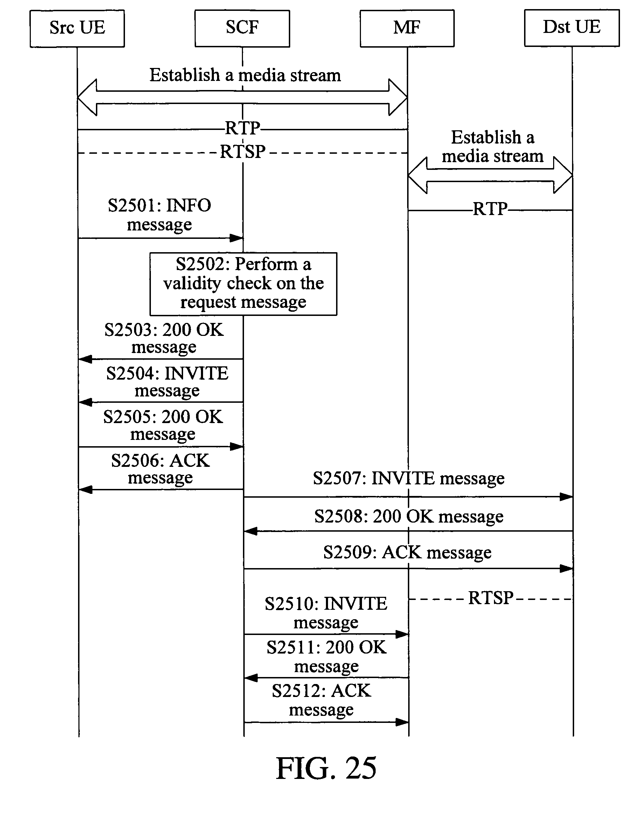

In order to give a further description of the technical solution of the media stream control method in the IP packet network according to the embodiment of the present invention, the technical solution of the embodiment of the present invention is described in detail below by taking an IMS-based IPTV architecture defined by European Telecommunications Standards Institute (ETSI) TISPAN (Telecommunications and Internet Converged Services and Protocols for Advanced Networking) as an example with reference to FIGs. 25 to 30.

In the IMS-based IPTV architecture defined by ETSI TISPAN, according to the embodiment of the present invention, a control right switching entity is an SCF, and a media processing entity is an MF. In the description of the embodiment, Src UE represents a control client with a control right, and Dst UE represents a designated common client.

The Src UE and the Dst UE establish media sessions with the MF through the SCF, and receive replicated media streams (for example, video media streams) sent by the MF, where the control client Src UE controls the replicated video media stream through an RTSP channel with the MF.

FIG. 25 is a flow chart of a media stream control method in an IP packet network according to a fifteenth embodiment of the present invention. Referring to FIG 25, the method includes the following steps.

In step S2501, an Src UE sends a control right switching message to an SCF to request to hand over a control right, and particularly, the control right switching message may be an INFO message configured to correlate replicated media stream sessions, so as to instruct the SCF to switch a VCR control right to a Dst UE, in which the INFO message carries an address of the Dst UE and a service identifier of handing over the control right on the media stream.

It should be noted that in addition to the INFO message, the control right switching message may be a MESSAGE message or a REFER message, and the INFO message is taken as an example in this embodiment.

In step S2502, the SCF performs a validity check on the INFO message, where the check includes checking whether the INFO message is correct, and checking whether the Src UE has a right to hand over the control right and whether the Dst UE has a right to take over the control right according to a service policy or a configured user right. Specifically, the service policy and the user right are set according to an operation policy of an operator or a service provider, for example, the service policy may be set that the video service does not allow the transfer of the control right and the audio service allows the transfer of the control right, the user right may be set that the Src UE has the right to control the media, the Dst UE has the right to control the media, and a third UE does not have the right to control the media, and the specific right configuration may be set according to the fact whether the user pays. For example, the Src UE and the Dst UE are paying users and are capable of controlling the media, while the third UE does not pay and thus can only view but not control the media.

In step S2503, the SCF returns a 200 OK message to the Src UE, indicating that the SCF accepts the request.

In step S2504, the SCF sends an INVITE message in the session to the Src UE to perform session re-negotiation, where the INVITE message carries an SDP offer, and the control right of the Src UE on the video media stream is cancelled by altering an RTSP control channel in the description of the SDP offer.

For example, the SDP offer instructs the Src UE to set the RTSP control channel for controlling the video media stream between the Src UE and the MF in a disabled state, and the description of the SDP offer is as follows:

```
 INVITE sip:SrcUe.example.com SIP/2.0
 Via: ...
 Route: ...
 Max-Forwards: ...
 From: ...
 To: ...
 Call-ID: ...
 CSeq: ...

 v=0
 o=SCF 20000000 20000001 IN IP4 scf.example.com
 s=
 c=IN IP4 mfhost.example.com
 t=0 0
 m=audio 10000 RTP/AVP 0 8 97
 a=rtpmap:8 PCMA/8000
 m=video 10100 RTP/AVP 31 32
 a=rtpmap:31 H261/90000
 a=label:1
 m=application 9 TCP/RTSP rtsp
 a=fmtp:rtsp version: 2.0
 a=rtspid m-stream:1
 a=inactive /* in this embodiment, the RTSP is set to be
                                           deactivated, that is, the RTSP is disabled */
```

Alternatively, the correlative relation between the video media stream and the RTSP control channel is removed, and the description of the SDP offer is as follows:

```
 INVITE sip: SrcUe@example.com SIP/2.0
 Via: ...
 Route: ...
 Max-Forwards: ...
 From: ...
 To: ...
 Call-ID: ...
 CSeq: ...

 v=0
 o=SCF 20000000 20000001 IN IP4 scf.example.com
 s=
 c=IN IP4 mfhost.example.com
 t=0 0
 m=audio 30000 RTP/AVP 0 8 97
 a=rtpmap:8 PCMA/8000
 a=label:1
 m=video 30100 RTP/AVP 31 32
 a=rtpmap:31 H261/90000
 a=label:2
 m=application 9 TCP/RTSP rtsp
 a=fmtp:rtsp version: 2.0
 a=rtspid m-stream:1, 2 /* in the attribute of the RTSP, a label value 2
                                        correlated with the video media row is deleted,
                                        and thus the correlation between the RTSP and
                                        the video media row is cut off */
```

In this embodiment, the label value 2 of the video media stream correlated with the RTSP control channel is deleted, and thus the correlation between the video media stream at the Src UE side and the RTSP is cut off.

In step S2505, after receiving the INVITE message sent by the SCF, the Src UE returns a 200 OK message carrying an SDP answer, updates the description of the RTSP control channel at the Src UE side, and confirms that the Src UE releases the control right on the video media stream, where the description of the SDP answer is as follows:

```
 SIP/2.0 200 OK
 Via: ...
 Max-Forwards: ...
 From: ...
 To: ...
 Call-ID: ...
 CSeq: ...

 v=0
 o=Alice 10000000 10000000 IN IP4 SrcUE.example.com
 s=
 c=IN IP4 SrcUE.example.com
 t=0 0
 m=audio 30000 RTP/AVP 0 8 97
 a=rtpmap:8 PCMA/8000
 a=label: 1
 m=video 30100 RTP/AVP 31 32
 a=rtpmap:31 H261/90000
 a=label:2
 m=application 9 TCP/RTSP rtsp
 a=fmtp:rtsp version: 2.0
 a=rtspid m-stream:1,                     /* the correlation between the RTSP and the
                                          video media row is removed */
```

In step S2506, the SCF receives the 200 OK message sent by the Src UE, and returns an ACK message to confirm that the SCF receives the 200 OK message.

In step S2507, the SCF sends an INVITE message in the session to the Dst UE to perform session re-negotiation. In this embodiment, since the Dst UE has not established any RTSP control channel with the MF yet, an RTSP control channel between the Dst UE and the MF needs to be established through negotiation, and the RTSP control channel is correlated with the replicated video media stream by carrying an SDP offer. The description of the SDP offer is as follows:

```
 INVITE sip:DstUe.example.com SIP/2.0
 Via: ...
 Route: ...
 Max-Forwards: ...
 From: ...
 To: ...
 Call-ID: ...
 CSeq: ...

 v=0
 o=SCF 21000000 21000001 IN IP4 scf.example.com
 s=
 c=IN IP4 mfhost.example.com
 t=0 0
 m=video 20100 RTP/AVP 31 32
 a=rtpmap:31 H261/90000
 a=label: 1
 m=application 9 TCP/RTSP rtsp /* newly established RTSP channel */
 a=fmtp:rtsp version: 2.0
 a=fmtp:rtsp h-accept-ranges: NPT
 a=connection:new
 a=setup:active
    a=rtspid m-stream:1
```

It should be noted that in step S2507, if an RTSP control channel exists between the Dst UE and the MF, it is checked whether the RTSP control channel is disabled; if an RTSP control channel exists between the Dst UE and the MF, it indicates that the RTSP control channel needs to be enabled; and it is checked whether the RTSP control channel is correlated with the media stream, and if no RTSP control channel exists between the Dst UE and the MF, the RTSP control channel is correlated with the media stream.

In step S2508, the Dst UE receives the INVITE message, correlates the video media stream with the newly established RTSP control channel at the Dst UE side according to the description of the SDP offer, and returns a 200 OK message to the SCP, where the 200 OK message carries an SDP answer, and the description of the SDP answer is as follows:

```
SIP/2.0 200 OK
 Via: ...
 Max-Forwards: ...
 From: ...
 To: ...
 Call-ID: ...
 CSeq: ...

 v=0
 o=Bob 40000000 40000000 IN IP4 DstUe.example.com
 s=
 c=IN IP4 DstUe.example.com
 t=0 0
 m=video 40100 RTP/AVP 31 32
 a=rtpmap:31 H261/90000
 a=label: 1
 m=application 60000 TCP/RTSP rtsp
 a=fmtp:rtsp version: 2.0
 a=fmtp:rtsp h-accept-ranges: NPT
 a=connection:new
 a=setup:passive
    a=rtspid m-stream:1
```

In step S2509, the SCF returns an ACK message to the Dst UE, indicating that the SCF has received the 200 OK message.

In step S2510, the SCF sends an INVITE message in the session to the MF to perform session re-negotiation, and carries the SDP information of the Src UE and the Dst UE in the SDP offer, so as to instruct the MF to disable the RTSP control channel with the Src UE, or remove the correlation between the RTSP control channel and the video media stream; and instruct the MF to create an RTSP channel with the Dst UE. The description of the SDP offer is as follows:

```
 INVITE sip:mfhost.example.com SIP/2.0
 Via: ...
 Route: ...
 Max-Forwards: ...
 From: ...
 To: ...
 Call-ID: ...
 CSeq: ...
 v=0
 o=SCF 22000000 22000001 IN IP4 scf.example.com
 s=
 c=IN IP4 SrcUe.example.com
 t=0 0
 m=audio 10000 RTP/AVP 0 8 97
 a=rtpmap:8 PCMA/8000
 a=label: 1
 m=video 10100 RTP/AVP 31 32
 a=rtpmap:31 H261/90000
 a=label:2
 m=application 9 TCP/RTSP rtsp
 a=fmtp:rtsp version: 2.0
 a=rtspid m-stream:1, 2 /* in the attribute of the RTSP, the label value 2
                                        correlated with the video media row is deleted,
                                        and thus the correlation between the RTSP and
                                        the video media row is cut off without affecting
                                        the control of the Src UE on the audio media
                                        stream */
 m=video 40100 RTP/AVP 31 32
 c=IN IP4 DstUe.example.com
 a=rtpmap:31 H261/90000
 a=label:3
 m=application 60000 TCP/RTSP rtsp
 c=IN IP4 DstUe.example.com
 a=fmtp:rtsp version: 2.0
 a=fmtp:rtsp h-accept-ranges: NPT
 a=connection:new
 a=setup:passive
    a=rtspid m-stream:3
```

It should be noted that in step S2510, when an RTSP control channel exists between the MF and the Dst UE, it indicates to enable the RTSP control channel with the Dst UE, or correlate the RTSP control channel with the replicated video media stream.

In step S2511, the MF sends a 200 OK message carrying an SDP answer to the SCF, updates the description of the RTSP control channel at the MF side, and confirms that the MF releases the control right of the Src UE on the video media stream and the Dst UE acquires the control right on the video media stream. The description of the SDP answer is as follows:

```
 SIP/2.0 200 OK
 Via: ...
 Max-Forwards: ...
 From: ...
 To: ...
 Call-ID: ...
 CSeq: ...
 v=0
 o=MF 30000000 30000000 IN IP4 mf.example.com
 s=
 c=IN IP4 mf.example.com
 t=0 0
 m=audio 30000 RTP/AVP 0 8 97
 a=rtpmap:8 PCMA/8000
 a=label:1
 m=video 30100 RTP/AVP 31 32
 a=rtpmap:31 H261/90000
 a=label:2
 m=application 9 TCP/RTSP rtsp
 a=fmtp:rtsp version: 2.0
 a=rtspid m-stream:1, 2 /* in the attribute of the RTSP, the label value 2
                                        correlated with the video media row is deleted,
                                        and thus the correlation between the RTSP and
                                        the video media row is cut off */
 m=video 20100 RTP/AVP 31 32
 a=rtpmap:31 H261/90000
 a=label:3
 m=application 9 TCP/RTSP rtsp
 a=fmtp:rtsp version: 2.0
 a=fmtp:rtsp h-accept-ranges: NPT
 a=connection:new
 a=setup:active
    a=rtspid m-stream:3
```

In step S2512, the SCF returns an ACK message to the MF, indicating that the SCF receives the 200 OK message. Then, the process ends.

Through the interaction of the SDP information, the control right is retracted from the Src UE and delivered to the Dst UE. After acquiring the control right, the Dst UE becomes a control client and is capable of performing VCR control on the video media stream. In this case, the other clients cannot control the video media stream, and thus conflicts resulting in unavailability of the service when the plurality of clients simultaneously controls the media stream are effectively prevented.

In the fifteenth embodiment as shown in FIG 25, the control client (Src UE) actively initiates a control right switching message, so as to request to hand over the control right to the designated common client (Dst UE). In the following, the technical solution of the embodiment of the present invention is described in detail below by taking a scenario that the Dst UE actively initiates a control right acquiring message to request to acquire the control right as an example.

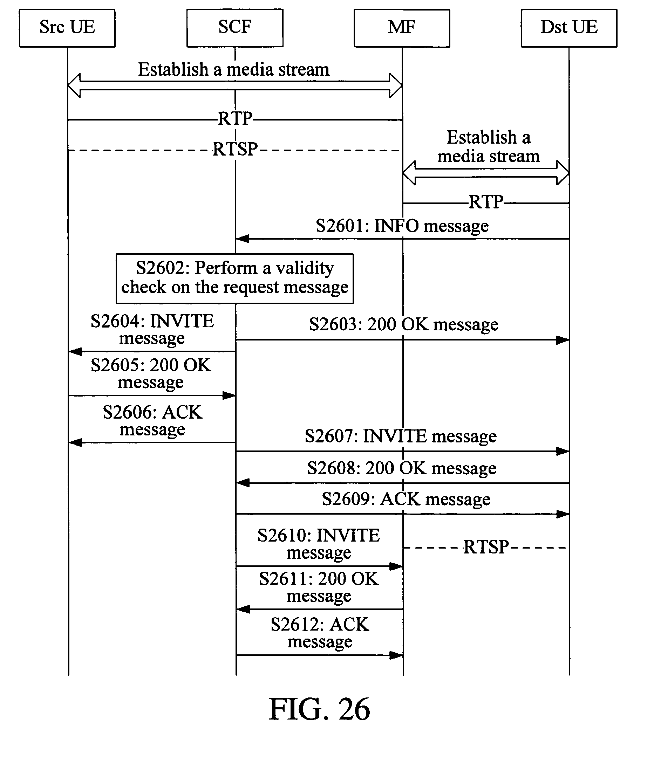

FIG 26 is a flow chart of a media stream control method in an IP packet network according to a sixteenth embodiment of the present invention. Referring to FIG 26, the method includes the following steps.

In step S2601, a Dst UE sends a control right acquiring message to an SCF, for example, sends an INFO message correlated with media stream control to the SCF, where the message carries a service identifier of acquiring the control right on the media stream, and requests to the SCF to acquire the VCR control right.

It should be noted that in addition to the INFO message, the control right acquiring message may be a MESSAGE message or a REFER message, and the INFO message is taken as an example in this embodiment.

In step S2602, the SCF performs a validity check on the INFO message, in which the check includes checking whether the INFO message is correct, and checking whether the Dst UE has a right to acquire the control right.

In step S2603, the SCF returns a 200 OK message to the Dst UE, indicating that the message passes the validity check, and the SCF accepts the request.
steps S2604 to S2612 are similar to steps S2504 to S2512 in the fifteenth embodiment as shown in FIG 25, so that the details thereof will not be described herein.

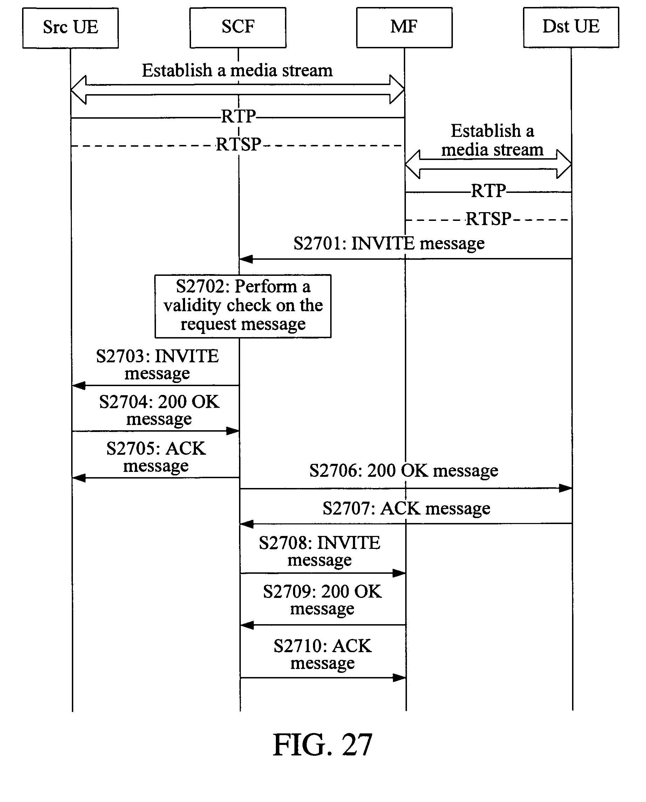

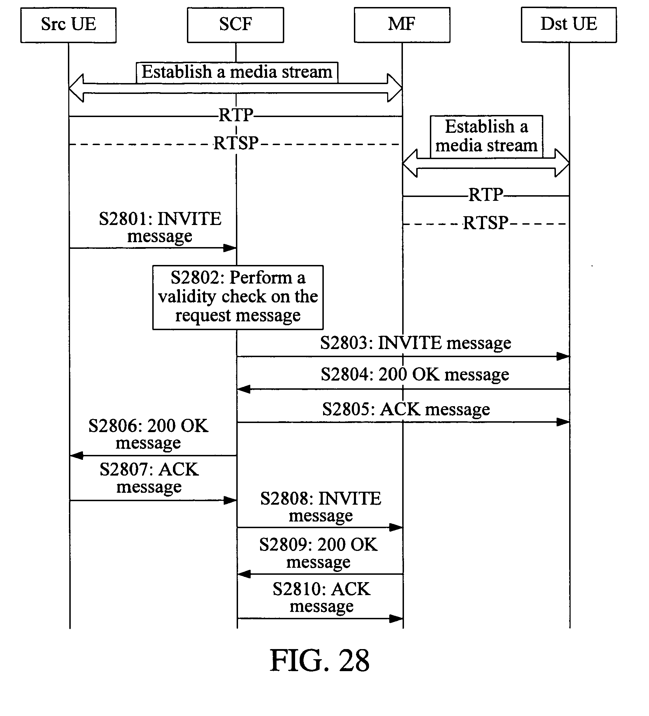

The technical solutions of the above embodiments of the present invention when the control right switching process is initiated through the INFO message are described in detail with reference to FIGs. 25 and 26. In the following, with reference to FIGs. 27 and 28, the technical solutions of the embodiments of the present invention are further described by taking a scenario that the control right request message (including the control right switching message and the control right acquiring message) is the INVITE message as an example.

FIG 27 is a flow chart of a media stream control method in an IP packet network according to a seventeenth embodiment of the present invention.

An Src UE and a Dst UE establish media sessions with an MF through an SCF, and receive replicated media streams (for example, video media streams) sent by the MF. In this embodiment, a control right switching entity is the SCF, and the Src UE and the Dst UE respectively establish RTSP control channels with the MF, where the Src UE is a control client, and has a control right on the replicated media stream.

The media stream control method in the IP packet network according to the embodiment of the present invention includes the following steps.

In step S2701, the Dst UE sends an INVITE message carrying an SDP offer to the SCF, and enables the disabled RTSP control channel through SDP negotiation, or correlates the replicated video media stream with the RTSP control channel.

In step S2702, the SCF performs a validity check on the INVITE message, where the check includes checking whether the INVITE message is correct, and checking whether the Dst UE has a right to acquire a VCR control right according to a service policy or configured user right information.

In step S2703, the SCF sends the INVITE message carrying the SDP offer to the Src UE, and disables the RTSP control channel through SDP negotiation, or removes the correlative relation between the replicated video media stream and the RTSP control channel.

In step S2704, the Src UE sends a 200 OK message carrying an SDP answer to the SCF, so as to allow the SCF to retract the VCR control right.

In step S2705, the SCF returns an ACK message to the Src UE.

In step S2706, the SCF sends a 200 OK message carrying the SDP answer to the Dsr UE, so as to allow the Dst UE to acquire the VCR control right.

In step S2707, the Dst UE returns an ACK message to the SCF.

In step S2708, the SCF sends the INVITE message in the session to the MF to perform session re-negotiation, and carries SDP information of the Src UE and the Dst UE in the message, so as to instruct the MF to disable the RTSP control channel with the Src UE, or remove the correlation between the RTSP control channel and the video media stream; and instruct the MF to create an RTSP channel with the Dst UE, or enable the RTSP control channel with the Dst UE, or correlate the RTSP control channel with the replicated video media stream.

In step S2709, the MF sends a 200 OK message carrying the SDP answer to the SCF, updates the description of the RTSP control channel at the MF side, and confirms that the MF releases the control right of the Src UE on the video media stream, and the Dst UE acquires the control right on the video media stream.

In step S2710, the SCF returns an ACK to the MF. Then, the process ends.

FIG 28 is a flow chart of a media stream control method in an IP packet network according to an eighteenth embodiment of the present invention. Referring to FIG 28, the method includes the following steps.

In step S2801, an Src UE sends an INVITE message carrying an SDP offer to an SCF, and disables an RTSP control channel through SDP negotiation, or removes the correlation between a replicated video media stream and the RTSP control channel, so that the Src UE hands over the control right, where the INVITE message carries an address of the Dst UE, and instructs the SCF to switch the VCR control right to the Dst UE .

In step S2802, the SCF performs a validity check on the INVITE message, where the check include checking whether the INVITE message is correct, and checking whether the Src UE has a right to hand over the control right and whether the Dst UE has a right to acquire the VCR control right according to a service policy or configured user right information.

In step S2803, the SCF sends the INVITE message carrying the SDP offer to the Dst UE, and enables the disabled RTSP channel through SDP negotiation, or correlates the replicated video media stream with the RTSP control channel.

In step S2804, the Dst UE returns a 200 OK message carrying an SDP answer to the SCF, so as to confirm that the Dst UE acquires the VCR control right.

In step S2805, the SCF returns an ACK message to the Dst UE.

In step S2806, the SCF returns the 200 OK message carrying the SDP answer to the Src UE, so as to confirm that the SCF retracts the control right.

In step S2807, the Src UE returns an ACK message to the SCF.

Steps S2808 to S2810 are similar to steps S2708 to S2710 in the seventeenth embodiment as shown in FIG 27, so that the details thereof will not be described herein.

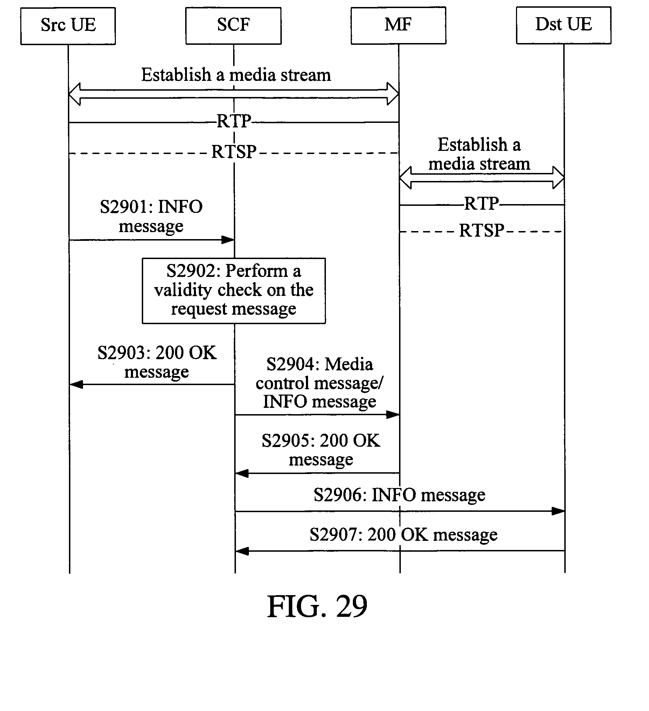

In the above embodiments, the media stream control method in the IP packet network implemented through SDP interaction according to the present invention is described in detail. In the following, with reference to FIGs. 29 to 30, the media stream control method implemented through SIP interaction according to the embodiment of the present invention is described in detail.

FIG 29 is a flow chart of a media stream control method in an IP packet network according to a nineteenth embodiment of the present invention.

An Src UE and a Dst UE establish media sessions with an MF through an SCF, and receive replicated media streams (for example, video media streams) sent by the MF. In this embodiment, a control right switching entity is the SCF, and the Src UE and the Dst UE respectively establish RTSP control channels with the MF, where the Src UE is a control client, and has a control right on the replicated media stream.

The media stream control method includes the following steps.

In step S2901, the Src UE sends a control right switching message to the SCF, for example, an INFO message correlated with the replicated media stream session, where the message carries an address of the Dst UE and a service identifier of handing over the control right on the media stream, so as to instruct the SCF to switch the VCR control right to the Dst UE.

It should be noted that in addition to the INFO message, the control right switching message may be a MESSAGE message or a REFER message.

In step S2902, the SCF performs a validity check on the INFO message, in which the check includes checking whether the INFO message is correct, and checking whether the Src UE has a right to hand over the control right and whether the Dst UE has a right to take over the control right according to a service policy or a configured user right.

In step S2903, the SCF returns a 200 OK message to the Src UE, indicating that the SCF retracts the control right of the Src UE.

In step S2904, the SCF sends the INFO message, or sends a media control message in the established media control channel to the MF, so as to instruct the MF to switch the control right on the replicated media stream from the Src UE to the Dst UE.

In step S2905, the MF returns a 200 OK message to the SCF, and executes a switch operation.

Specifically, the correlative RTSP channel of the Dst UE is enabled, for example, the correlative RTSP channel of the Dst UE is set to be an active channel, and the control message transmitted on the channel is processed.

The correlative RTSP channel of the Src UE is disabled, for example, the correlative RTSP channel of the Src UE is set to be an unavailable channel, and the control message transmitted on the channel is not processed.

In step S2906, the SCF sends the INFO message to the Dst UE, so as to notify the Dst UE that the SCF acquires the VCR control right on the replicated media stream.

In step S2907, the Dst UE returns a 200 OK message to the SCF, so as to confirm that the Dst UE acquires the VCR control right.

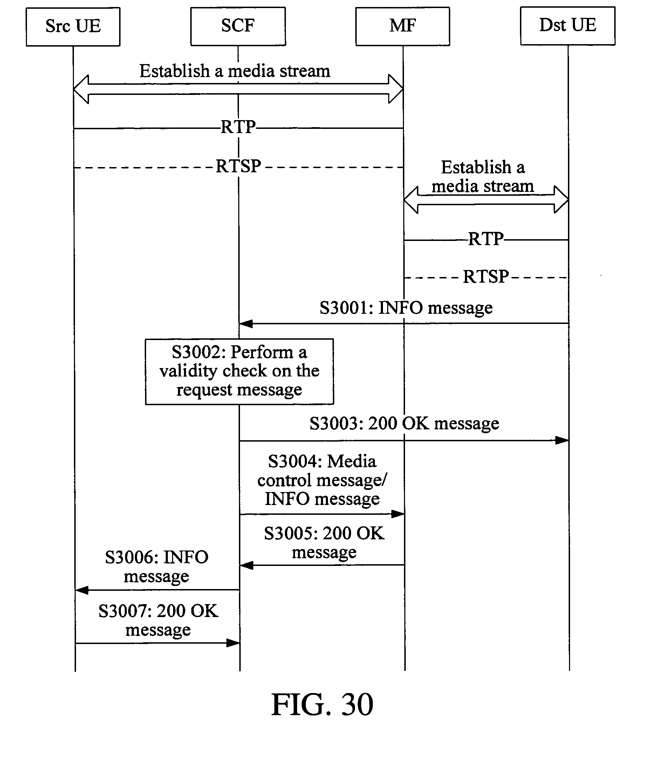

FIG 30 is a flow chart of a media stream control method in an IP packet network according to a twentieth embodiment of the present invention. Referring to FIG 30, the method includes the following steps.

In step S3001, a Dst UE sends a control right acquiring message to an SCF, for example, an INFO message correlated with a replicated media stream session, so as to request the SCF for the VCR control right.

It should be noted that in addition to the INFO message, the control right acquiring message may be a MESSAGE message or a REFER message.

In step S3002, the SCF performs a validity check on the INFO message, where the check includes checking whether the INFO message is correct, and checking whether the Dst UE has a right to acquire the VCR control right.

In step S3003, the SCF returns a 200 OK message to the Dst UE, so as to confirm that the Dst UE has the right to acquire the control right.

In step S3004, the SCF sends the INFO message, or sends a media control message in the established media control channel to the MF, so as to instruct the MF to switch the control right on the replicated media stream from the Src UE to the Dst UE.

In step S3005, the MF returns a 200 OK message to the SCF, and executes a switch operation.

Specifically, the correlative RTSP channel of the Dst UE is enabled, for example, the correlative RTSP channel of the Dst UE is set to be an active channel, and the control message transmitted on the channel is processed.

The correlative RTSP channel of the Src UE is disabled, for example, the correlative RTSP channel of the Src UE is set to be an unavailable channel, and the control message transmitted on the channel is not processed.

In step S3006, the SCF sends the INFO message to the Src UE, so as to notify the Src UE that the SCF retracts the VCR control right on the replicated media stream.

In step S3007, the Src UE returns a 200 OK message to the SCF.It should be noted that in all the embodiments, the description is given by taking the video media stream as an example. In the practical implementation, the media stream is not limited to the video media stream, and may be audio, animation, multimedia, and other media streams.

Although the technical solutions of the media stream control method according to the embodiments of the present invention in the IMS-based IPTV architecture defined by ETSI TISPAN are described in detail above, the present invention is not limited herein, and may be implemented in other architectures. For example, in an IMS architecture, according to the embodiments of the present invention, the control right switching entity is an AS, and the media processing entity is an MRF. The interaction process of the embodiments of the present invention in the IMS architecture is completely the same as the interaction process in the IMS-based IPTV architecture, and the details will not be described herein.

It can be seen from the above embodiments that in the media stream control method, system, and control right switching entity of the present invention, when a plurality of clients shares one media stream, the control right is switched from the control client to one of the other common clients according to a control right request message sent by the client (including the control client with the control right and the common clients without the control right), so as to realize the transfer of the control right. The client acquiring the control right has the right to control the media stream. If another client intends to control the media stream, the client initiates a control right request message to acquire the control right on the media stream, so that the plurality of clients is enabled to control the same media stream, and thus conflicts resulting in unavailability of the service when the plurality of clients simultaneously operates the same media stream in the prior art are prevented, and the system performance is effectively improved.

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a Compact Disk Read-Only Memory (CD-ROM), USB flash drive, or a removable hard drive. The software product includes a number of instructions that enable a computer device (personal computer, server, or network device) to execute the methods provided in the embodiments of the present invention.

Although the present invention has been described through some exemplary embodiments, the invention is not limited to such embodiments. Any modification, equivalent replacement, or improvement made without departing from the principle of the present invention should fall within the scope of the present invention.

## Claims

1. A media stream controlling method, applied in an Internet Protocol (IP) packet network, comprising:
receiving a media control request sent by a client;
performing correlative processing on the media control request; and
controlling a media stream according to the correlative processing result.

2. The method according to claim 1, wherein before the receiving the media control request sent by the client, the method further comprises establishing a session:
when establishing the session, correlating a session identifier of the client with a first identifier; sending the session identifier of the client to the client; and establishing the session with the client through the session identifier of the client, wherein the session identifier of the client is an identifier of establishing the session with the client; and the first identifier is an identifier of establishing a Real Time Streaming Protocol (RTSP) session with a media stream server, or an instance identifier of controlling the media stream.

3. The method according to claim 2, wherein the establishing the session comprises:
establishing the session in the single-session mode or establishing the session in the multi-session mode.

4. The method according to claim 3, wherein when the session is established in the single-session mode, the establishing the session in the single-session mode comprises:
receiving an RTSP session setup request message sent by a first client, wherein the message carries an identifier and an address of at least one second client;
assigning a unified second session identifier to the first client and each of the second clients, and correlating the second session identifier with the first identifier; and
sending the second session identifier to the first client and each of the second clients, and establishing RTSP sessions with the first client and each of the second clients through the second session identifier,
wherein the second session identifier is an RTSP session identifier.

5. The method according to claim 3, wherein when the session is established in the multi-session mode, the establishing the session in the multi-session mode comprises:
receiving a plurality of correlative RTSP session setup request messages sent by a first client, wherein one message carries an identifier of the first client, and each of other messages carries an identifier of a second client;
assigning different RTSP session identifiers to the first client and each of the second clients according to the plurality of correlative messages;
correlating the different RTSP session identifiers assigned to the first client and each of the second clients with the first identifier assigned by a server side; and acquiring, by the first client and each of the second clients, the assigned RTSP session identifiers; and
establishing different RTSP sessions with the first client and each of the second clients through the assigned session identifiers, respectively;.

6. The method according to claim 3, wherein when the session is established in the multi-session mode, the establishing the session in the multi-session mode comprises:receiving an RTSP session setup request message sent by a first client, wherein the message carries an identifier and an address of at least one second client;
assigning different RTSP session identifiers to the first client and each of the second clients, and correlating the different RTSP session identifiers with the first identifier assigned by a server side; and acquiring, by the first client and each of the second clients, the assigned RTSP session identifiers; and
establishing different RTSP sessions with the first client and each of the second clients through the assigned session identifiers, respectively.;

7. The method according to claim 3, wherein when the session is established in the multi-session mode, the establishing the session in the multi-session mode comprises:
receiving a Session Initiation Protocol (SIP) session setup request message sent by a first client, wherein the SIP session setup request message carries a request of establishing RTSP sessions for the first client and at least one second client;
assigning different RTSP session identifiers to the first client and each of the second clients, and correlating the different RTSP session identifiers with the first identifier assigned by a server side; and acquiring, by the first client and each of the second clients, the assigned RTSP session identifiers; and
establishing different RTSP sessions with the first client and each of the second clients through the assigned session identifiers, respectively.

8. The method according to claim 1, wherein before the receiving the media control request sent by the client, the method further comprises:
receiving an SIP session setup request message sent by a first client, wherein the SIP session setup request message carries a request of establishing an RTSP session for at least one second client;
establishing an SIP session with the first client for media control; and
assigning different RTSP session identifiers to each of the second clients, and correlating the different RTSP session identifiers and the SIP session with a first identifier assigned by a server side.

9. The method according to claim 2, wherein before the receiving the media control request sent by the client, the method further comprises:
receiving an SIP session setup request message sent by a second client, wherein the SIP session setup request message carries a request of establishing an RTSP session for the second client; and
assigning an RTSP session identifier to the second client, and correlating the RTSP session identifier with the first identifier assigned by the server side.

10. The method according to any one of claims 4 to 9, wherein the first client is an application server (AS), and the second client is a user equipment (UE).

11. The method according to claim 1, wherein
the performing the correlative processing on the media control request comprises: synchronizing RTSP statuses of different clients; and
the synchronizing the RTSP statuses of the different clients comprises:
notifying, by the client performing a specific control operation, the other clients of the latest RTSP status, performing status synchronization, and updating, by the clients receiving an RTSP status notification, the local RTSP statuses; or
after executing a specific control operation of a specific client, notifying the other clients of the latest RTSP status, performing status synchronization, and updating, by the clients receiving an RTSP status notification, the local RTSP statuses.

12. The method according to claim 11, wherein
the performing the correlative processing on the media control request comprises: dealing with status conflicts that occur during the synchronization of the RTSP statuses of the different clients; and
the dealing with the status conflicts comprises: entering a block status and ceasing the processing of the received control operation request, after executing the specific control operation of the specific client; and continuing to process a next control operation request, after confirming that the statuses of the clients are completely synchronized or a block timer times out.

13. The method according to claim 12, wherein the confirming that the statuses of the clients are completely synchronized comprises:
receiving a status synchronization complete message sent by the client performing the specific control operation; or
receiving status synchronization success response messages returned by other clients, after sending a status synchronization notification message to the other clients.

14. The method according to claim 1, wherein
the performing the correlative processing on the media control request comprises: executing corresponding media control processing according to the media control request;
the executing the corresponding media control processing according to the media control request comprises:
locking or unlocking a specific RTSP session according to the media control request; or
negotiating a control operation right of a specific client according to the media control request.

15. The method according to claim 12, wherein the negotiating the control operation right of the specific client comprises:
setting a control operation right of a client with a low priority, according to an indication of a client with a high priority; or
assigning the control operation rights of the different clients, according to priorities of the different clients; or
acquiring the control operation rights of the different clients, according to a right negotiation result among the different clients.

16. The method according to claim 1, wherein the controlling the media stream according to the correlative processing result comprises:
forwarding the media control request of the client to a media control end point, and controlling, by the media control end point, the media stream; or
directly controlling the media stream according to the correlative processing result.

17. The method according to any one of claims 11 to 15, wherein the specific control operation is a control operation resulting in changes of the RTSP status.

18. A network logic entity, configured to control a media stream in an Internet Protocol (IP) packet network, comprising:
a receiving unit, configured to receive a media control request sent by a client;
a correlative processing unit, configured to perform correlative processing on the media control request received by the receiving unit; and
a control unit, configured to control the media stream according to a correlative processing result of the correlative processing unit.

19. The network logic entity according to claim 18, further comprising: a session establishing unit, configured to establish, in the single-session mode or the multi-session mode, a Real Time Streaming Protocol (RTSP) session or a Session Initiation Protocol (SIP) session with the client.

20. The network logic entity according to claim 18, wherein the correlative processing unit further comprises:
a status synchronizing sub-unit, configured to synchronize RTSP statuses of different clients; and
a media control processing sub-unit, configured to lock or unlock a specific RTSP session according to the media control request; or negotiate a control operation right of the specific client according to the media control request.

21. The network logic entity according to claim 18, wherein the network logic entity is an individual network entity, or is located on an application server (AS), or is a packet-switched streaming service (PSS) server.

22. The network logic entity according to any one of claims 18 to 21, wherein the network logic entity is an RTSP processing function (RPF).

23. A media stream control system, applied to an Internet Protocol (IP) packet network, comprising:
a client, configured to send a media control request to a Real Time Streaming Protocol (RTSP) processing function (RPF); and
the RPF, , configured to receive the media control request sent by the client and perform correlative processing on the media control request; and control a media stream according to a correlative processing result.

24. The media stream control system according to claim 23, wherein the client is an application server (AS) or a user equipment (UE).

25. The media stream control system according to claim 22 or 23, wherein the RPF is an individual network entity, or is located on an AS, or is located on a packet-switched streaming service (PSS) server.

26. The media stream control system according to claim 25, wherein when the RPF is not located on the PSS server, the system further comprises:
a server, configured to control the media stream according to the correlative processing result of the RPF.

27. A media stream control method in an Internet Protocol (IP) packet network, comprising:
receiving a control right request message;
performing a validity check on the control right request message; and
switching a control right from a first client to a second client, according to the control right request message that passes the validity check.

28. The method according to claim 27, wherein the performing the validity check on the control right request message comprises at least one of the following:
checking whether the control right request message is correct;
checking whether the first client has a right to hand over the control right; and
checking whether the second client has a right to take over the control right.

29. The method according to claim 27, wherein the switching the control right from the first client to the second client according to the control right request message that passes the validity check comprises:
retracting the control right of the first client by altering a media control channel; and
delivering the control right to the second client by altering the media control channel.

30. The method according to claim 29, wherein the retracting the control right of the first client by altering the media control channel comprises:
disabling a media control channel between the first client and a media processing entity; or
removing a correlative relation of the media control channel between the first client and the media processing entity with a media stream.

31. The method according to claim 29, wherein the delivering the control right to the second client by altering the media control channel comprises:
enabling a media control channel between the second client and a media processing entity; or
correlating the media control channel between the second client and the media processing entity with a media stream.

32. The method according to any one of claims 27 to 31, wherein the control right request message comprises:
a control right switching message, sent by the first client and used for indicating that the control right needs to be switched to the second client; or
a control right acquiring message, sent by the second client and configured to acquire the control right.

33. A control right switching entity, comprising:
a receiving unit, configured to receive a control right request message;
a checking unit, configured to perform a validity check on the control right request message received by the receiving unit; and
a switching unit, configured to switch a control right from a first client to a second client, according to the control right request message that passes the validity check performed by the checking unit.

34. The control right switching entity according to claim 33, wherein the checking unit comprises:
a message checking sub-unit, configured to check whether the control right request message is correct; and
a right checking sub-unit, configured to check whether the first client has a right to hand over the control right, and check whether the second client has a right to take over the control right.

35. The control right switching entity according to claim 33 or 34, wherein the switching unit comprises:
a retracting sub-unit, configured to send an indication message used for indicating that the control right of the first client needs to be retracted by altering a media control channel; and
a delivery sub-unit, configured to send an indication message used for indicating that the control right needs to be delivered to the second client by altering the media control channel.

36. The control right switching entity according to claim 35, wherein the control right switching entity is a service control function (SCF) or an application server (AS).

37. A media stream control client, comprising:
a message sending unit, configured to send a control right request message to a control right switching entity;
a message receiving unit, configured to receive an indication message which is returned by the control right switching entity and indicates that a control right needs to be switched; and
a processing unit, configured to hand over the control right or take over the control right according to the indication message received by the message receiving unit.

38. The client according to claim 37, wherein the processing unit comprises:
a control right handing out sub-unit, configured to alter a media control channel and release the control right according to the indication message received by the message receiving unit; and
a control right receiving sub-unit, configured to alter the media control channel and take over the control right according to the indication message received by the message receiving unit.

39. A media stream control system in an Internet Protocol (IP) packet network, comprising the control right switching entity according to any one of claims 33 to 36, the media stream control client according to claim 37 or 38, and a media processing entity, wherein
the media processing entity is configured to alter a media control channel, and retract or deliver a control right according to an indication message sent by the control right switching entity; and
the media processing entity is a media function (MF) or a media resource function (MRF).
